# EUROPÄISCHE PATENTSCHRIFT

(11) **EP 3 163 139 B1**
(45) Veröffentlichungstag und Bekanntmachung des Hinweises auf die Patenterteilung: **20.12.2017**
(21) Anmeldenummer: 15191453.8
(22) Anmeldetag: 26.10.2015
(51) Int. Cl.: F16K 31/524

(54) **VENTILANORDNUNG**
VALVE ASSEMBLY
SYSTÈME DE VANNES

(43) Veröffentlichungstag der Anmeldung: 03.05.2017
(73) Patentinhaber: FESTO AG & Co. KG, 73734 Esslingen (DE)
(72) Erfinder: Schuppler, Swen, 70174 Stuttgart (DE); Paech, Stephan, 73732 Esslingen (DE); Wenske, Eduard, 70806 Kornwestheim (DE)
(74) Vertreter: Patentanwälte Magenbauer & Kollegen Partnerschaft mbB

(56) Entgegenhaltungen:
- DE-A1- 2 424 226
- DE-U1- 8 436 606
- US-A- 2 098 682

## Beschreibung

Die Erfindung betrifft eine Ventilanordnung, mit mindestens einem mechanisch betätigbaren Ventil, das ein in einem Ventilgehäuse angeordnetes, unter Ausführung einer linearen Umschaltbewegung in Achsrichtung einer Hauptachse zwischen verschiedenen Schaltstellungen umschaltbares Ventilglied aufweist und das über eine Betätigungseinrichtung verfügt, die ein mechanisch zu einer rotativen Eingangsbewegung um eine zu der Hauptachse rechtwinkelige Drehachse antreibbares Betätigungsglied aufweist, das zur Erzeugung der linearen Umschaltbewegung des Ventilgliedes mit dem Ventilglied bewegungsgekoppelt ist.

Aus der DE 84 36 606 U1 ist eine Ventilanordnung der vorgenannten Art bekannt, die über ein mechanisch betätigbares Ventil verfügt, das als Rollenhebelventil konzipiert ist. In einem Ventilgehäuse des Ventils befindet sich ein unter Ausführung einer Umschaltbewegung linear bewegliches Ventilglied, das mit einem drehbar gelagerten und aufgrund der Drehlagerung verschwenkbaren Betätigungsglied zusammenwirkt, bei dem es sich um einen Rollenhebel handelt. Ein an dem Rollenhebel vorbeilaufender Nockenkörper kann den Rollenhebel zu einer rotativen Eingangsbewegung um die Schwenklagerstelle antreiben, woraus die Umschaltbewegung des Ventilgliedes resultiert, weil sich der Rollenhebel stirnseitig an dem Ventilglied abstützt.

Der Erfindung liegt die Aufgabe zugrunde, Maßnahmen vorzuschlagen, die auf einfache Weise die lösbare Fixierung mindestens einer Schaltstellung des Ventilgliedes ermöglichen.

Zur Lösung dieser Aufgabe ist in Verbindung mit den eingangs genannten Merkmalen vorgesehen, dass die Betätigungseinrichtung einen mindestens eine der Schaltstellungen des Ventilgliedes lösbar fixierenden Rastmechanismus aufweist, der über zwei zu der Drehachse koaxiale erste und zweite Rastelemente verfügt, die an ihren einander axial zugewandten Stirnseiten über miteinander kooperierende erste und zweite Rastmittelstrukturen verfügen, die zwecks gegenseitigem Eingriff durch Federmittel ständig axial aneinander angedrückt sind, wobei das die erste Rastmittelstruktur aufweisende erste Rastelement unverdrehbar am Ventilgehäuse angeordnet ist und wobei das die zweite Rastmittelstruktur aufweisende zweite Rastelement unverdrehbar am Betätigungsglied angeordnet ist, sodass es die rotative Eingangsbewegung des Betätigungsgliedes mitmacht und die beiden Rastmittelstrukturen bei Ausführung der rotativen Eingangsbewegung aneinander abgleiten, wobei wenigstens eines der beiden Rastelemente entgegen der Federkraft der Federmittel unter Ausführung einer Hubbewegung in Achsrichtung der Drehachse verschiebbar ist, sodass seine bezüglich des anderen Rastelementes eingenommene Axialposition durch das Zusammenwirken der bei der rotativen Eingangsbewegung des Betätigungsgliedes aneinander abgleitenden Rastmittelstrukturen veränderbar ist.

Erfindungsgemäß besteht die Möglichkeit, mindestens eine Schaltstellung des Ventilgliedes lösbar zu fixieren, ohne das Ventilglied an diesen Fixierungsmaßnahmen unmittelbar zu beteiligen. Dies bedeutet, dass die zur lösbaren Fixierung vorhandenen Verrastungsmaßnahmen unabhängig vom Ventilglied realisierbar sind, was die Ausstattung unterschiedlicher Ventiltypen mechanisch betätigbarer Ventile mit gleichartigen Betätigungseinrichtungen begünstigt. Es besteht insbesondere die Möglichkeit, wahlweise ein Sitzventil oder ein Kolbenschieberventil mit einer den erfindungsgemäßen Rastmechanismus aufweisenden Betätigungseinrichtung auszustatten, ohne dass hierfür irgendwelche Manipulationen am jeweiligen Ventilglied erforderlich wäre. Insbesondere lässt sich die den Rastmechanismus aufweisende Betätigungseinrichtung unabhängig vom Ventilhub verwenden, der sich speziell bei Sitzventilen und Kolbenschieberventilen nicht unerheblich voneinander unterscheidet. Der Rastmechanismus enthält zwei zur Drehachse der rotativen Eingangsbewegung koaxiale Rastelemente, die an den einander zugewandten Stirnseiten über aufeinander abgestimmte erste und zweite Rastmittelstrukturen verfügen, die bei der rotativen Eingangsbewegung des Betätigungsgliedes aneinander abgleiten. Die dabei zum Verrasten und Entrasten erforderliche axiale Relativbewegung zwischen den beiden Rastmittelstrukturen ist dadurch gewährleistet, dass die beiden Rastelemente in der Achsrichtung der Drehachse relativ zueinander beweglich und durch Federmittel elastisch nachgiebig aneinander angedrückt sind. Das erste Rastelement ist drehfest am Ventilgehäuse angeordnet, während das zweite Rastelement drehfest am Betätigungsglied angeordnet ist und dessen Eingangsbewegung mitmacht. Zur Gewährleistung der axialen Relativbewegung ist mindestens eines der beiden Rastelemente bezüglich derjenigen Komponente, an der es unverdrehbar angeordnet ist, entgegen der Federkraft der Federmittel axial verschieblich.

Vorteilhafte Weiterbildungen der Erfindung gehen aus den Unteransprüchen hervor.

Die Betätigungseinrichtung lässt sich besonders einfach realisieren, wenn von den beiden Rastelementen nur eines axial verschiebbar ist, während das andere axial unbewegbar fixiert ist. Bevorzugt kann nur das bezüglich des Ventilgehäuses unverdrehbar fixierte erste Rastelement die Hubbewegung ausführen. Dieses erste Rastelement ist durch die Federmittel gegen das am Betätigungsglied angeordnete zweite Rastelement vorgespannt, wobei die Federmittel vorzugsweise zwischen dem ersten Rastelement und dem Betätigungsglied wirksam sind. Prinzipiell könnten die Federmittel aber auch so ausgeführt sein, dass sie zwischen dem ersten Rastelement und dem Ventilgehäuse wirken.

Das erste Rastelement ist zweckmäßigerweise in einem zu der Drehachse koaxialen hohlzylindrischen Führungsfortsatz des Ventilgehäuses linear verschiebbar und zugleich unverdrehbar gelagert. Bevorzugt wird es von dem Betätigungsglied koaxial durchsetzt und ist insbesondere hülsenförmig ausgebildet. Das Betätigungsglied ist bezüglich des ersten Rastelementes frei drehbar.

Auch das bezüglich des Betätigungsgliedes unverdrehbare zweite Rastelement befindet sich zweckmäßigerweise in dem hohlzylindrischen Führungsfortsatz.

Das Betätigungsglied weist zweckmäßigerweise einen Abtriebsabschnitt auf, der über mindestens eine die rotative Eingangsbewegung mitmachende Kraftabgabestruktur verfügt, die bei der Eingangsbewegung eine Antriebskraft auf das Ventilglied ausübt. Das zweite Rastelement ist zweckmäßigerweise an diesem Abtriebsabschnitt angeordnet und insbesondere einstückig mit diesem Abtriebsabschnitt ausgebildet. Vorzugsweise sind der Abtriebsabschnitt und das zweite Rastelement gemeinsam von einem hülsenförmigen Abtriebskörper des Betätigungsgliedes gebildet, der sich in dem Ventilgehäuse koaxial zu der Drehachse des Betätigungsgliedes erstreckt.

Eine besonders einfach variabel gestaltbare Kraftübertragung zwischen dem Betätigungsglied und dem Ventilglied lässt sich realisieren, wenn die Betätigungseinrichtung einen kraftübertragend zwischen den Abtriebsabschnitt und das Ventilglied eingegliederten Schieberkörper aufweist, der mit einer Antriebskulisse ausgestattet ist und deshalb als Kulissenschieber bezeichnet wird. Er ist in Achsrichtung der Hauptachse relativ zum Ventilgehäuse bewegbar und wirkt antriebsmäßig mit dem Ventilglied zusammen, bezüglich dem er separat oder auch einstückig ausgebildet sein kann. Durch Zusammenwirken der Kraftabgabestruktur des Abtriebsabschnittes mit der Antriebskulisse des Kulissenschiebers lässt sich das beim Verdrehen des Betätigungsgliedes hervorrufbare Bewegungsverhalten des Ventilgliedes nach Bedarf vorgeben. Es besteht insbesondere die Möglichkeit, durch Verwendung unterschiedlich gestalteter Antriebskulissen unterschiedlich große Ventilhübe beim Verdrehen des Betätigungsgliedes zu realisieren.

Auch besteht vorzugsweise die Möglichkeit, die Ventilanordnung mit mehreren Kulissenschiebern auszustatten, die über untereinander abweichend gestaltete Antriebskulissen verfügen und die abhängig vom Ventiltyp des mechanisch betätigbaren Ventils alternativ verwendbar sind, um ein gewünschtes Bewegungsverhalten des Ventilgliedes einzustellen.

Eine der beiden Rastmittelstrukturen hat zweckmäßigerweise eine sich um die Drehachse herum erstreckende, axial orientierte Gleitfläche, die mindestens eine Rastvertiefung definiert. Die andere Rastmittelstruktur hat mindestens einen an dieser Gleitfläche anliegenden und bei der rotativen Eingangsbewegung an der Gleitfläche entlanggleitenden Rastvorsprung. In der zu fixierenden Schaltstellung des Ventilgliedes greift der Rastvorsprung in eine Rastvertiefung ein. Eine solche Rastvertiefung kann beispielsweise nach Art einer Kerbe ausgebildet sein oder auch einfach dadurch realisiert sein, dass die Gleitfläche in ihrer Längsrichtung einen Knick oder eine Stufe aufweist und/oder über einen axial ansteigenden Flächenabschnitt verfügt, der am einen Endbereich durch einen diesbezüglich vorstehenden Flächenabschnitt begrenzt ist.

Zwischen der Gleitfläche und dem Rastvorsprung liegt vorzugsweise nur eine linienförmige Berührung vor. In diesem Zusammenhang hat der Rastvorsprung beispielsweise einen sich konisch oder V-förmig verjüngenden Endabschnitt. Dies ermöglicht einen besonders verschleißarmen Betrieb.

Bevorzugt sind die Rastvorsprünge und die Rastvertiefungen jeweils paarweise vorhanden und bezüglich der Drehachse sich jeweils diametral gegenüberliegend platziert. Auf diese Weise werden die beiden Rastelemente durch die Federmittel symmetrisch aneinander angedrückt, wobei Verkantungseffekte vermieden werden.

Durch die Ausgestaltung der Rastmittelstrukturen lässt sich auf einfache Weise die realisierbare Betriebsart des Ventils vorgeben. Beispielsweise kann dadurch wahlweise eine monostabile oder wenigstens bistabile Betriebsart verwirklicht werden. Bei der monostabilen Betriebsart hat das Ventilglied nur eine einzige stabile Schaltstellung, in die es, insbesondere hervorgerufen durch eine Federeinrichtung, stets zurückkehrt, wenn am Betätigungsglied keine Betätigungskraft anliegt. Eine mehrfach stabile und wenigstens bistabile Betriebsart lässt sich mittels wenigstens zweier Rastvertiefungen realisieren, die dafür sorgen, dass das Ventilglied durch Verdrehen des Betätigungsgliedes in wenigstens zwei Schaltstellungen positionierbar ist, in denen es so lange verharrt, bis das Betätigungsglied erneut mit einer Betätigungskraft beaufschlagt wird. Auch lässt sich auf diese Weise beispielsweise eine sogenannte mittenzentrierte Betriebsart verwirklichen, bei der das Ventilglied normalerweise eine durch Verrastung stabilisierte Mittelstellung einnimmt, aus der es in einander entgegengesetzte Richtungen auslenkbar ist, um in zwei weiteren Schaltstellungen positioniert zu werden.

Die Ventilanordnung enthält vorzugsweise mehrere erste und/oder zweite Rastelemente, die sich in der Ausgestaltung ihrer ersten und/oder zweiten Rastmittelstrukturen voneinander unterscheiden, beispielsweise in der vorstehend erläuterten Art und Weise. Diese Rastelemente können dann alternativ verwendet werden, um bezüglich des Ventilgliedes unterschiedliche Betriebsverhalten mit unterschiedlichen Schaltstellungen und/oder unterschiedlichen Umschaltverhalten vorzugeben. Ein Ventil kann beispielsweise durch Austausch des ersten und/oder zweiten Rastelementes sehr einfach auf eine andere Betriebsart umgerüstet werden. Auch kann bei der Herstellung der Ventilanordnung der individuell gewünschte Ventiltyp dadurch realisiert werden, dass die Rastelemente entsprechend ausgewählt und eingebaut werden.

Zur Einleitung der die rotative Eingangsbewegung hervorrufenden Betätigungskraft weist das Betätigungsglied zweckmäßigerweise einen bezüglich der Drehachse radial abstehenden Handhebel auf. Bei dem Ventil handelt es sich folglich um ein Handhebelventil, das sich sehr einfach mit Hilfe des Handhebels manuell betätigen lässt. Alternativ besteht allerdings durchaus die Möglichkeit, an dem Betätigungsglied eine Schnittstelle anzubringen, an der sich zusätzlich oder alternativ zu dem Handhebel eine elektrische und/oder durch Fluidkraft betätigbare Antriebseinrichtung ankoppeln lässt, um die rotative Eingangsbewegung beispielsweise motorisch zu erzeugen.

Um mindestens eine Schaltstellung des Ventilgliedes sehr exakt vorgeben zu können, ist es vorteilhaft, wenn das Betätigungsglied über ein radial abstehendes Anschlagelement verfügt, das bei der rotativen Eingangsbewegung verschwenkt wird und mit mindestens einem gehäusefesten Gegenanschlag zusammenwirken kann. Bei einem mehrteiligen Aufbau des Betätigungsgliedes kann das Anschlagelement stiftförmig ausgebildet sein und gleichzeitig dazu genutzt werden, mehrere der Komponenten des Betätigungsgliedes relativ zueinander unbeweglich zu fixieren.

Das Ventilgehäuse ist zweckmäßigerweise mehrteilig ausgebildet, wobei es ein erstes Gehäuseteil aufweist, in dem sich das Ventilglied erstreckt. Ein zweites Gehäuseteil ist an dem ersten Gehäuseteil bevorzugt lösbar fixiert und repräsentiert ein Gehäuse der Betätigungseinrichtung, in dem das Betätigungsglied drehbar gelagert ist.

Nachfolgend wird die Erfindung anhand der beiliegenden Zeichnung näher erläutert. In dieser zeigen:
- Figur 1: in perspektivischer Darstellung ein erstes Ausführungsbeispiel eines mechanisch betätigbaren Ventils der erfindungsgemäßen Ventilanordnung,
- Figur 2: das Ventil aus Figur 1 in einem Längsschnitt gemäß Schnittlinie II-II aus Figur 4 in einer ersten Schaltstellung des Ventilgliedes,
- Figur 3: das Ventil aus Figur 1 im Längsschnitt gemäß Schnittlinie III-III aus Figur 5 in einer zweiten Schaltstellung des Ventilgliedes,
- Figur 4: eine teilweise geschnittene Seitenansicht gemäß Schnittlinie IV-IV aus Figur 2,
- Figur 5: eine teilweise geschnittene Seitenansicht gemäß Schnittlinie V-V aus Figur 3,
- Figur 6: eine teilweise geschnittene Rückansicht gemäß Schnittlinie VI-VI aus Figur 4,
- Figur 7: eine teilweise geschnittene Rückansicht gemäß Schnittlinie VII-VII aus Figur 4,
- Figur 8: eine Draufsicht des Ventils gemäß Blickrichtung gemäß Pfeil VIII aus Figur 4 ohne das Gehäuseteil der Betätigungseinrichtung,
- Figur 9: eine Draufsicht des Ventils mit Blickrichtung gemäß Pfeil IX aus Figur 5 ohne Darstellung des Gehäuseteils der Betätigungseinrichtung,
- Figur 10: eine perspektivische Einzeldarstellung eines bei dem Ventil der Figuren 1 bis 9 zum Einsatz kommenden ersten Rastelementes,
- Figur 11: in einer perspektivischen Darstellung eine weitere Ausführungsform eines mechanisch betätigbaren Ventils der erfindungsgemäßen Ventilanordnung,
- Figur 12: einen Längsschnitt des Ventils aus Figur 1 gemäß Schnittlinie XII-XII aus Figur 14, wobei das Ventilglied eine erste Schaltstellung einnimmt,
- Figur 13: einen Längsschnitt des Ventils aus Figur 11 gemäß Schnittlinie XIII-XIII aus Figur 15, wobei das Ventilglied eine zweite Schaltstellung einnimmt,
- Figur 14: eine teilweise geschnittene Seitenansicht gemäß Schnittlinie XIV-XIV aus Figur 12,
- Figur 15: eine teilweise geschnittene Seitenansicht gemäß Schnittlinie XV-XV aus Figur 13,
- Figur 16: eine teilweise geschnittene Rückansicht gemäß Schnittlinie XVI-XVI aus Figur 14,
- Figur 17: eine teilweise geschnittene Rückansicht gemäß Schnittlinie XVII-XVII aus Figur 15,
- Figur 18: eine Draufsicht mit Blickrichtung gemäß Pfeil XVIII aus Figur 14 ohne Darstellung des Gehäuseteils der Betätigungseinrichtung,
- Figur 19: eine Draufsicht mit Blickrichtung gemäß Pfeil XIX aus Figur 15 ohne Darstellung des Gehäuseteils der Betätigungseinrichtung, und
- Figur 20: eine perspektivische Einzeldarstellung eines bei dem Ventil der Figuren 11 bis 19 verwendeten ersten Rastelementes.

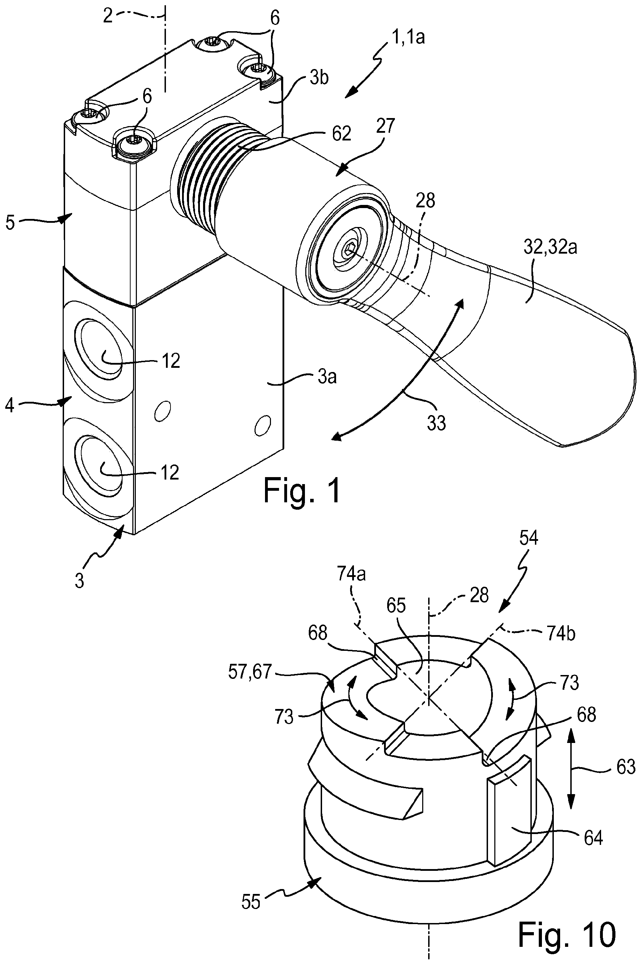

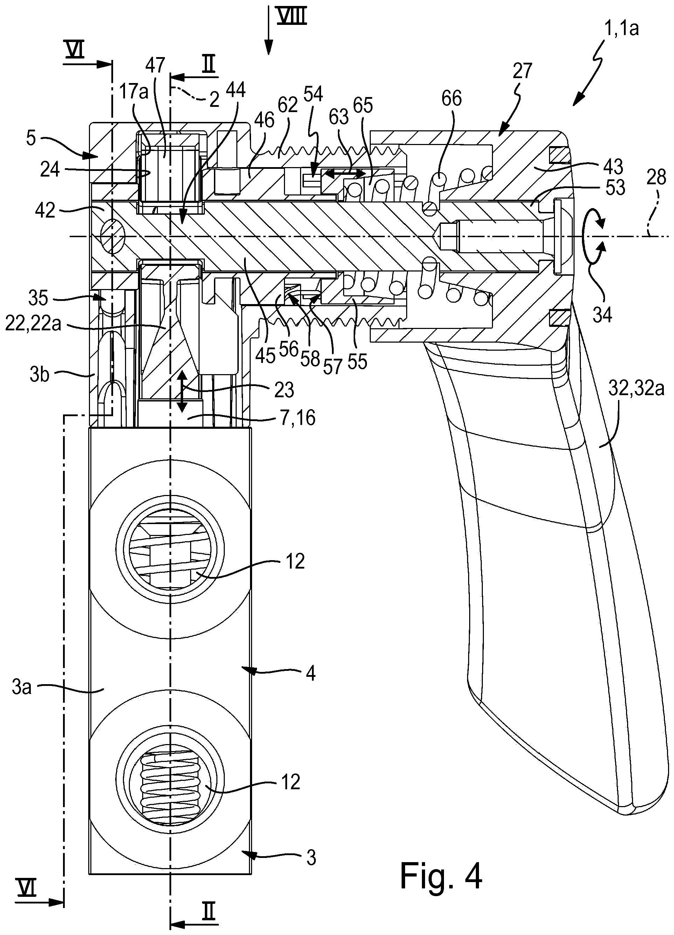

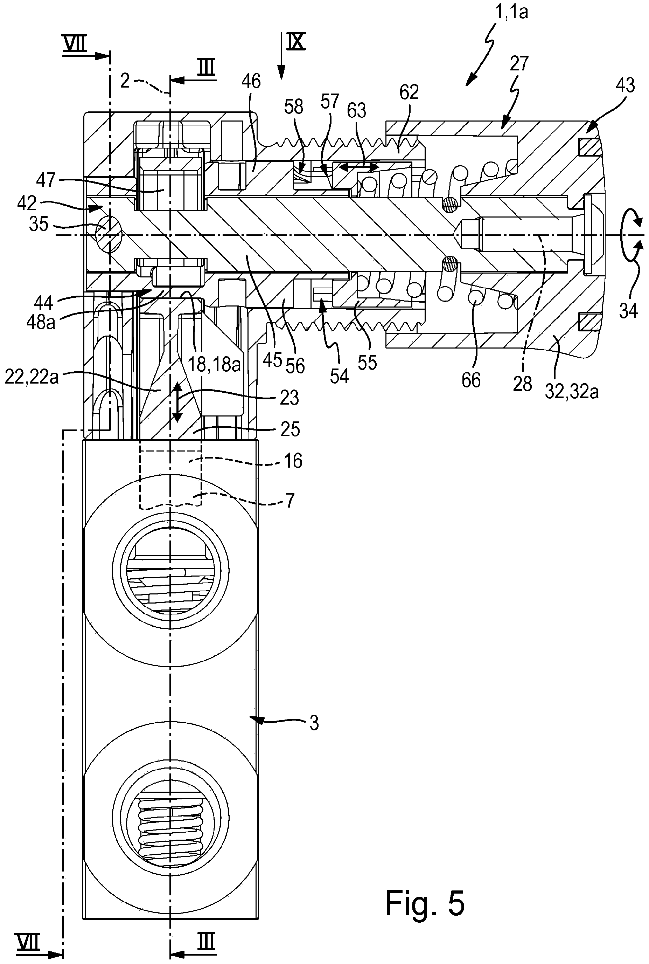

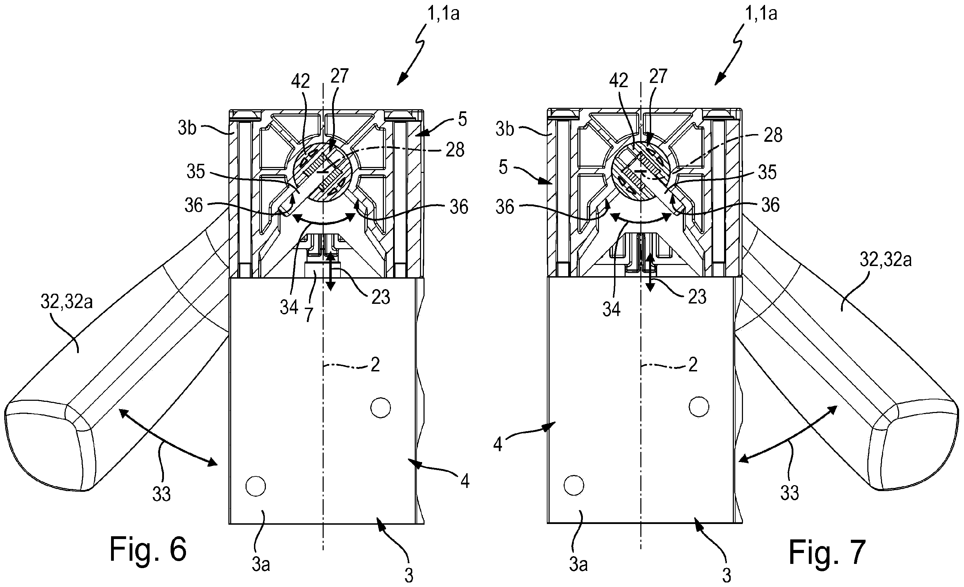

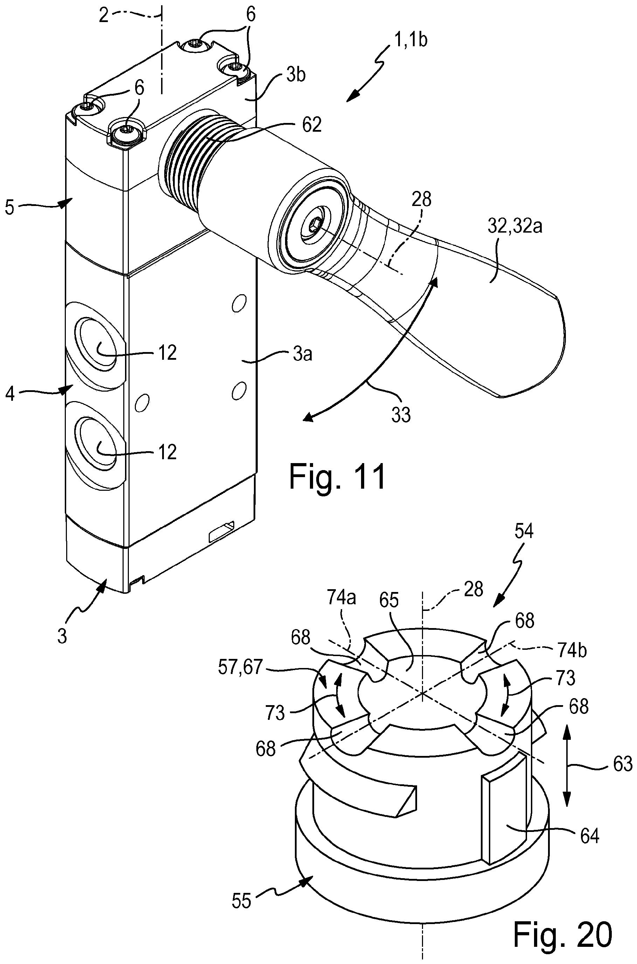

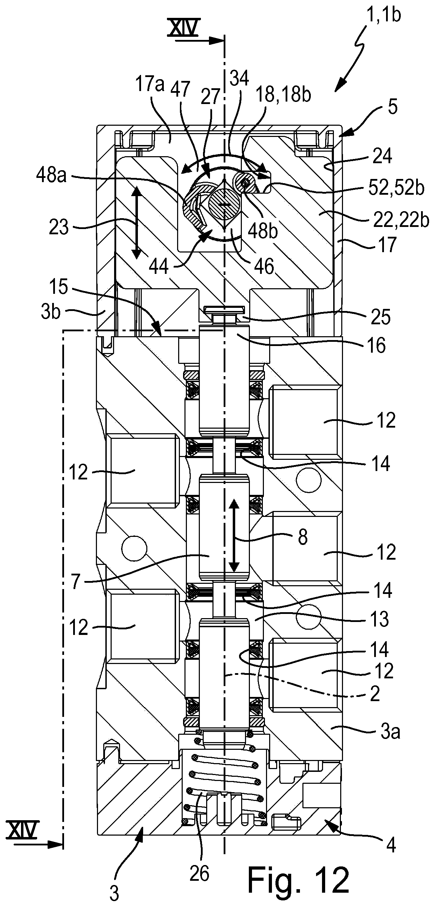

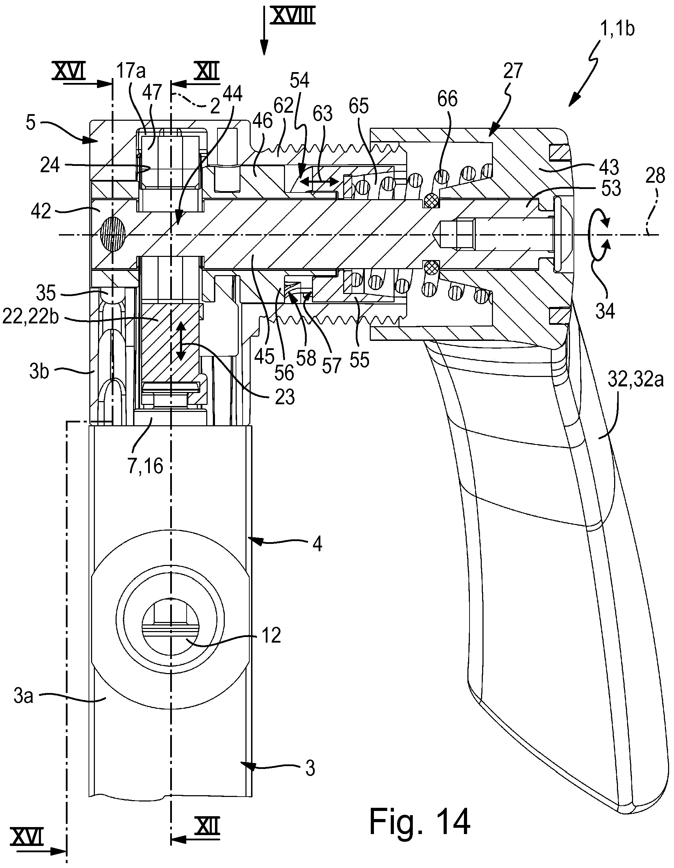

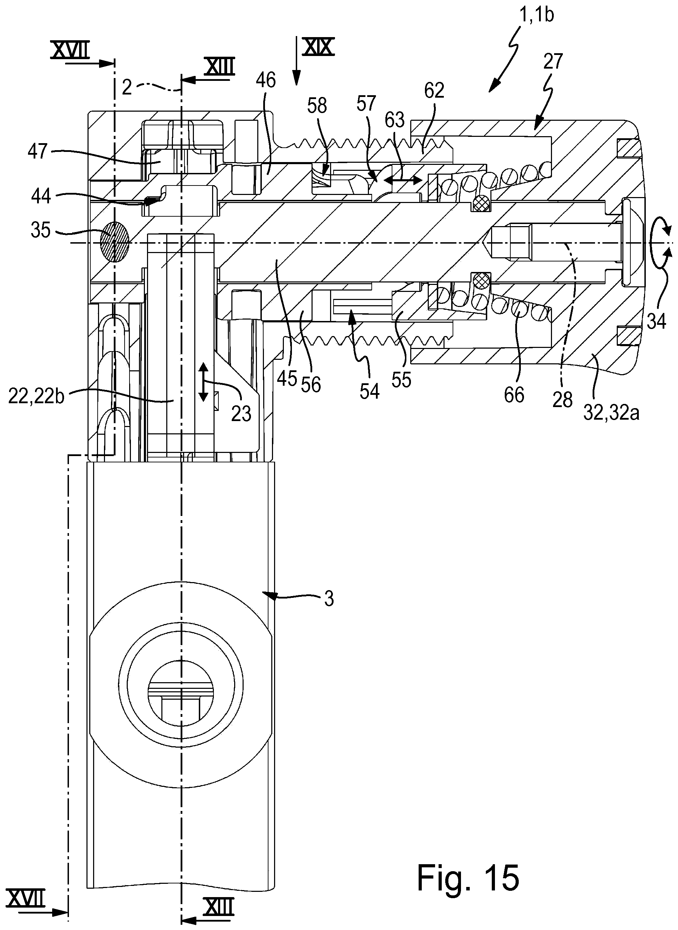

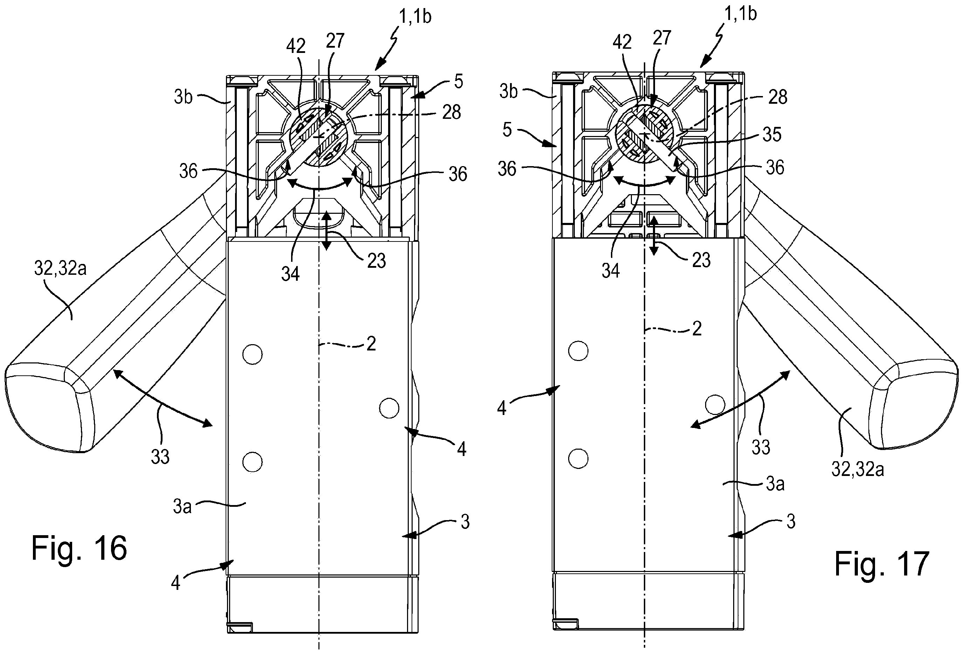

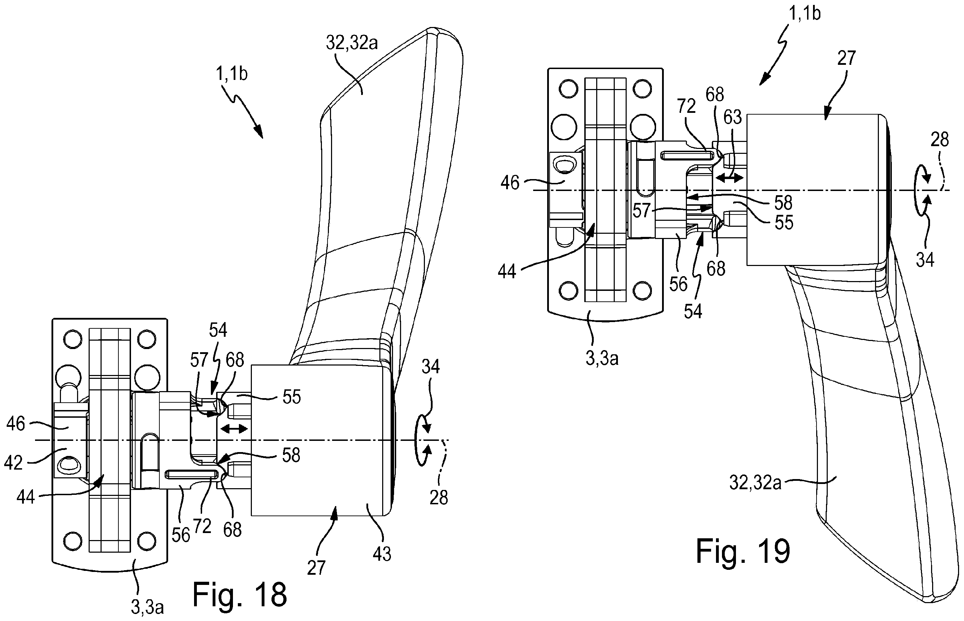

Die aus der Zeichnung ersichtliche Ventilanordnung enthält ein oder mehrere mechanisch betätigbare Ventile 1, wobei die Figuren 1 bis 10 eine bevorzugte erste Ausführungsform eines solchen Ventils 1 und die Figuren 11 bis 20 eine bevorzugte zweite Ausführungsform eines solchen Ventils 1 wiedergeben. Sofern im Einzelfall keine anderslautenden Angaben gemacht werden, bezieht sich die nachfolgende Beschreibung gemeinsam auf sämtliche illustrierten Ausführungsbeispiele.

Das Ventil 1 hat eine Hauptachse 2, bei der es sich insbesondere um die Längsachse des Ventils 1 handelt. Ein Ventilgehäuse 3 des Ventils 1 hat bevorzugt eine mit der Hauptachse 2 zusammenfallende Längsachse.

Das Ventil 1 setzt sich aus einem Steuerteil 4 und einer in Achsrichtung der Hauptachse 2 darauffolgend angeordneten Betätigungseinrichtung 5 zusammen. Die Betätigungseinrichtung 5 ist insbesondere lösbar an dem Steuerteil 4 angebracht, insbesondere mit Hilfe von Befestigungsschrauben 6.

Das Ventilgehäuse 3 hat ein zu dem Steuerteil 4 gehörendes erstes Gehäuseteil 3a und ein zu der Betätigungseinrichtung 5 gehörendes zweites Gehäuseteil 3b. Das zweite Gehäuseteil 3b bildet mit anderen Worten ein Gehäuse der Betätigungseinrichtung 5.

Die Betätigungseinrichtung 5 dient zur Betätigung eines Ventilgliedes 7 des Steuerteils 4. Das Ventilglied 7 ist in Achsrichtung der Hauptachse 2 bewegbar in dem Ventilgehäuse 3 und insbesondere in dem ersten Gehäuseteil 3a angeordnet, wobei die daraus resultierende Linearbewegung des Ventilgliedes 7 als Umschaltbewegung 8 bezeichnet sei, die durch einen Doppelpfeil verdeutlicht ist.

Das Ventilgehäuse 3, insbesondere das erste Gehäuseteil 3a, ist von mehreren Ventilkanälen 12 durchsetzt, die jeweils einerseits zu einer Außenfläche des Ventilgehäuses 3 und andererseits in eine im Ventilgehäuse 3 ausgebildete Ventilkammer 13 einmünden. Im Rahmen der Umschaltbewegung 8 ist das Ventilglied 7 relativ zum Ventilgehäuse 3 in unterschiedlichen Schaltstellungen positionierbar, in denen es in unterschiedlicher Weise mit einem oder mehreren Ventilsitzen 14 zusammenwirkt und dadurch die Ventilkanäle 12 in einem bestimmten Muster miteinander verbindet und voneinander abtrennt.

Das Ventil 1 der Figuren 1 bis 10 ist ein Sitzventil 1a, bei dem mindestens ein Ventilsitz 14 bezogen auf die Umschaltbewegung 8 axial orientiert ist, also in Achsrichtung der Hauptachse 2. Zum Öffnen und Schließen einer Fluidverbindung ist das Ventilglied 7 vom betreffenden Ventilsitz 14 entweder abgehoben oder es sitzt auf diesem Ventilsitz 14 axial auf. Der Hub der Umschaltbewegung 8 zum wahlweisen Öffnen und Verschließen der Fluidverbindung ist bei dem Sitzventil 1a relativ klein.

Das Ventil 1 der Figuren 11 bis 20 ist ein Kolbenschieberventil 1b, bei dem der mindestens eine Ventilsitz 14 bezüglich der Hauptachse 2 radial orientiert ist. Das Schließen und Öffnen einer Fluidverbindung geschieht hier dadurch, dass Längenabschnitte größeren und kleineren Durchmessers des Ventilgliedes 7 abwechselnd axial auf gleicher Höhe mit einem der Ventilsitze 14 positioniert sind, wobei ein in den vom Ventilsitz 14 umschlossenen Bereich eintauchender Längenabschnitt größeren Durchmessers radial an dem betreffenden Ventilsitz 14 anliegt. Ein Kolbenschieberventil 1b hat verglichen mit einem Sitzventil 1a üblicherweise einen größeren Hub der Umschaltbewegung 8 auszuführen, um die Schaltstellung zu verändern.

Abhängig von der Anzahl der Ventilkanäle 12 und der möglichen Schaltstellungen des Ventilgliedes 7 weisen die Ventile 1 unterschiedliche Ventilfunktionalitäten auf. Das Ventil 1 der Figuren 1 bis 10 hat drei Ventilkanäle 12 und ermöglicht zwei Schaltstellungen des Ventilgliedes 7, sodass eine 3/2-Ventilfunktionalität vorliegt. Das Ventil 1 der Figuren 11 bis 20 verfügt über fünf Ventilkanäle und ermöglicht zwei Schaltstellungen des Ventilgliedes 7, sodass eine 5/2-Ventilfunktionalität gegeben ist. Bei dem Ventil der Figuren 11 bis 20 könnte auch noch eine dritte Schaltstellung des Ventilgliedes 7 vorgesehen sein, um eine 5/3-Ventilfunktionalität zu verwirklichen.

An einer in der Achsrichtung der Hauptachse 2 orientierten ersten Stirnfläche 15 des ersten Gehäuseteils 3a ist die Ventilkammer 13 offen, wodurch ein dort befindlicher erster axialer Endabschnitt 16 des Ventilgliedes 7 von der Seite der Betätigungseinrichtung 5 her zugänglich ist.

In einem bevorzugt kastenförmigen Hauptabschnitt 17 des zweiten Gehäuseteils 3b des Ventilgehäuses 3 ist ein eine Antriebskulisse 18 aufweisendes und deshalb als Kulissenschieber 22 bezeichnetes Schieberelement in Achsrichtung der Hauptachse 2 linear verschiebbar gelagert. Die aufgrund der linearen Verschiebbarkeit von dem Kulissenschieber 22 ausführbare Linearbewegung ist durch einen Doppelpfeil verdeutlicht und wird im Folgenden als Antriebsbewegung 23 bezeichnet. Der Hauptabschnitt 17 definiert eine Aufnahmekammer 17a für den Kulissenschieber 22, die im an dem Steuerteil 4 montierten Zustand des zweiten Gehäuseteils 3b durch das Steuerteil 4 verschlossen ist.

Eine oder mehrere Linearführungsstrukturen 24 an der Innenfläche der Wandung des zweiten Gehäuseteils 3b gewährleisten eine verkantungsfreie Verschiebeführung für den Kulissenschieber 22. Bevorzugt ist der Kulissenschieber 22 im Wesentlichen plattenförmig ausgebildet.

Der Kulissenschieber 22 hat einen bevorzugt als Fortsatz ausgebildeten Antriebsabschnitt 25, der bei dem Ventil 1 der Figuren 1 bis 10 an der Stirnfläche des ersten axialen Endabschnittes 16 des Ventilgliedes 7 anliegt. Dadurch kann der Kulissenschieber 22 eine drückende Kraft auf das Ventilglied 7 ausüben. Bei dem Ventil 1 der Figuren 11 bis 20 ist der Antriebsabschnitt 25 in beiden Richtungen der Umschaltbewegung 8 formschlüssig mit dem Ventilglied 7 gekoppelt, sodass der Kulissenschieber 22 sowohl eine drückende als auch eine ziehende Kraft auf das Ventilglied 7 ausüben kann.

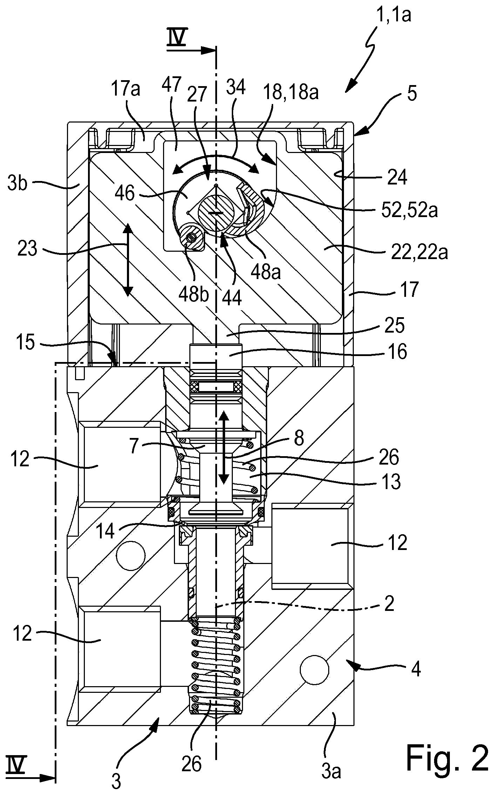

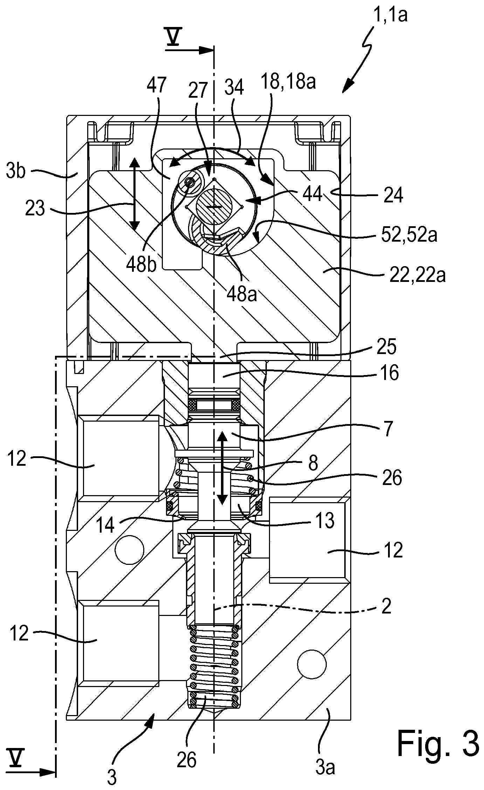

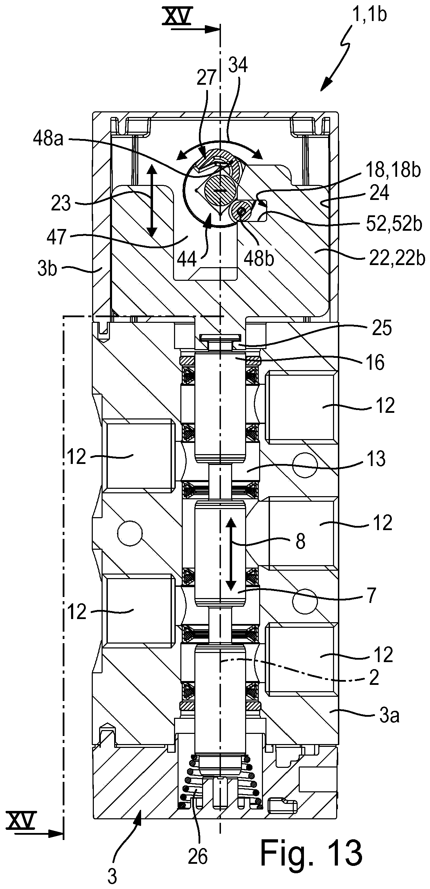

Durch mindestens eine Federeinrichtung 26 des Steuerteils 4 ist das ein- oder mehrteilige Ventilglied 7 bei den illustrierten Ausführungsbeispielen in eine beispielsweise aus Figuren 2, 4, 12 und 14 ersichtliche erste Schaltstellung vorgespannt, in der es weitestmöglich in Richtung zu der Betätigungseinrichtung 5 verlagert ist. Der an dem ersten axialen Endabschnitt 16 anliegende Kulissenschieber 22 nimmt dabei eine von der ersten Stirnfläche 15 abgerückte erste Schieberstellung ein. Wird der Kulissenschieber 22 aus dieser ersten Schieberstellung unter Ausführung der Antriebsbewegung 23 an die erste Stirnfläche 15 des ersten Gehäuseteils 3a angenähert, drückt er auf das Ventilglied 7 und schiebt selbiges unter Überwindung der Federkraft der Federeinrichtung 26 bis zum Erreichen der zweiten Schaltstellung des Ventilgliedes 7 vor sich her. Diese zweite Schaltstellung des Ventilgliedes 7 ist aus Figuren 3 und 13 ersichtlich. Der Kulissenschieber 22 nimmt dabei eine im Vergleich zur ersten Schieberstellung näher an die erste Stirnfläche 15 herangerückte zweite Schieberstellung ein.

Das Ventil 1 des Ausführungsbeispiels der Figuren 1 bis 10 ist vorzugsweise von einem monostabilen Ventiltyp. Wenn der in der zweiten Schieberstellung positionierte Kulissenschieber 22 keine ihn entgegen der Federkraft der Federeinrichtung 26 stabilisierende Antriebskraft erfährt, wird er durch das Ventilglied 7 in die erste Schieberstellung zurückgeschoben, wobei sich das Ventilglied 7 in die erste Schaltstellung zurückbewegt. Das Ventil 1 des Ausführungsbeispiels der Figuren 11 bis 20 ist hingegen von einem bistabilen Ventiltyp und weist zwei stabile Schaltstellungen auf. Auf die Federeinrichtung 26 könnte hier auch verzichtet werden.

Die Umschaltbewegung 8 des Ventilgliedes 7 ist mittels der Betätigungseinrichtung 5 hervorrufbar.

Die Betätigungseinrichtung 5 hat ein bevorzugt mehrteiliges Betätigungsglied 27, das an dem Ventilgehäuse 3 diesbezüglich um eine Drehachse 28 verdrehbar gelagert ist. Das Verdrehen des Betätigungsgliedes 27 ist durch Einleitung einer Betätigungskraft in einen Betätigungsabschnitt 32 des Betätigungsgliedes 27 hervorrufbar. Dieser Betätigungsabschnitt 32 ist vorzugsweise ein bezüglich der Drehachse 28 radial abstehender Handhebel 32a. Er lässt sich mit einer Hand ergreifen, um ein Drehmoment einzuleiten, wobei der Handhebel 32a gemäß Doppelpfeil 33 verschwenkt wird und das Betätigungsglied 27 insgesamt die angesprochene Drehbewegung ausführt, die im Folgenden auch als rotative Eingangsbewegung 34 bezeichnet und in der Zeichnung durch einen Doppelpfeil angedeutet ist.

Die rotative Eingangsbewegung 34 ist in ihrem maximalen Drehwinkel bezüglich des Ventilgehäuses 3 zweckmäßigerweise begrenzt. Hierzu weist das Betätigungsglied 27, bevorzugt innerhalb der Aufnahmekammer 17a, ein radial abstehendes Anschlagelement 35 auf, das bei der rotativen Eingangsbewegung 34 um die Drehachse 28 verschwenkt wird. In seinem Schwenkweg liegen zwei bezüglich des Ventilgehäuses 3 ortsfeste Gegenanschläge 36, die bevorzugt einstückig mit der Wandung des zweiten Gehäuseteils 3b ausgeführt sind und an denen das Anschlagelement 35 zur Vorgabe zweier End-Drehpositionen abwechselnd zur Anlage gelangt.

Die Drehachse 28 ist rechtwinkelig zu der Hauptachse 2 und folglich rechtwinkelig zur Richtung der Umschaltbewegung 8 des Ventilgliedes 7 orientiert. Das Betätigungsglied 27 ragt rechtwinkelig zur Hauptachse 2 vom Ventilgehäuse 3 weg.

Das Betätigungsglied 27 hat einen in Achsrichtung der Drehachse 28 orientierten vorderen Endabschnitt 42 und einen diesbezüglich axial entgegengesetzt orientierten rückwärtigen Endabschnitt 43. Mit seinem vorderen Endabschnitt 42 ist es zur Definition der Drehachse 28 im Ventilgehäuse 3 und dabei zweckmäßigerweise in dem zweiten Gehäuseteil 3b drehbar gelagert. Der rückwärtige Endabschnitt 43 befindet sich außerhalb des Ventilgehäuses 3 und ist insbesondere von dem Betätigungsabschnitt 32 beziehungsweise dem Handhebel 32a gebildet. Das Anschlagelement 35 befindet sich zweckmäßigerweise an dem vorderen Endabschnitt 42.

Durch die rotative Eingangsbewegung 34 des Betätigungsgliedes 27 lässt sich die lineare Umschaltbewegung 8 des Ventilliedes 7 hervorrufen. Hierzu ist das Betätigungsglied 27 mit dem Ventilglied 7 bewegungsgekoppelt. Dabei könnte das Betätigungsglied 27 prinzipiell direkt mit dem Ventilglied 7 zusammenwirken. Von Vorteil ist es jedoch, wenn die erwähnte Bewegungskopplung unter Zwischenschaltung eines Kulissenschiebers 22 der weiter oben schon erwähnten Art erfolgt, der kraftübertragend zwischen einem Abtriebsabschnitt 44 des Betätigungsgliedes 27 und dem ersten axialen Endabschnitt 16 des Ventilgliedes 7 eingegliedert ist.

Das Betätigungsglied 27 hat bevorzugt einen mehrteiligen Aufbau. In diesem Zusammenhang weist es bevorzugt einen zu der Drehachse 28 koaxialen Stangenkörper auf, der im Folgenden als Betätigungsstange 45 bezeichnet wird und auf den ein separater und insbesondere hülsenförmig ausgebildeter Abtriebskörper 46 koaxial aufgesteckt ist. Die Betätigungsstange 45 besteht aus Stabilitätsgründen vorzugsweise aus Metall. Am rückwärtigen Ende der Betätigungsstange 45 ist zweckmäßigerweise der Betätigungsabschnitt 32 befestigt.

Die Betätigungsstange 45 hat zweckmäßigerweise einen dem rückwärtigen Endabschnitt 43 des Betätigungsgliedes 27 zugeordneten Schnittstellenabschnitt 53, an dem der Betätigungsabschnitt 32 in bevorzugt lösbarer Weise drehfest montiert ist. Der Betätigungsabschnitt 32 kann alternativ auch einstückig mit der Betätigungsstange 45 ausgebildet sein.

Der mit dem Kulissenschieber 22 kooperierende Abtriebsabschnitt 44 ist insbesondere ein Bestandteil des Abtriebskörpers 46. Aufgrund einer unrunden und bevorzugt mehreckigen Konturierung des Außenumfanges der Betätigungsstange 45 und der die Betätigungsstange 45 aufnehmenden Bohrung des Abtriebskörpers 46, sind die Betätigungsstange 45 und der Abtriebskörper 46 drehfest miteinander gekoppelt, sodass ein mittels des Betätigungsabschnittes 32 hervorgerufenes Verdrehen der Betätigungsstange 45 ein gleichzeitiges Verdrehen des Abtriebskörpers 46 einschließlich des daran ausgebildeten Abtriebsabschnittes 44 zur Folge hat. Der Abtriebskörper 46 besteht vorzugsweise aus einem Kunststoffmaterial.

Das Anschlagelement 35 ist bevorzugt stiftförmig ausgebildet und in miteinander fluchtende Bohrungen des Abtriebskörpers 46 und der Betätigungsstange 45 eingesetzt, sodass es gleichzeitig die axiale Relativposition zwischen diesen beiden Komponenten 46, 45 fixiert. Das Anschlagelement 35 übernimmt also bevorzugt auch die Funktion eines Sicherungsstiftes.

Bei einem nicht illustrierten Ausführungsbeispiel sind die Funktionen der Betätigungsstange 45 und des Abtriebskörpers 46 in einem insoweit einteiligen und insgesamt aus Kunststoffmaterial bestehenden Betätigungsglied 27 vereinigt.

Das Betätigungsglied 27 durchgreift in dem zweiten Gehäuseteil 3b mit seinem vorderen Endabschnitt 42 eine den Kulissenschieber 22 quer zu der Hauptachse 2 durchsetzende Aussparung 47. Mit in Achsrichtung der Längsachse 28 diesseits und jenseits des Kulissenschiebers 22 befindlichen Längenabschnitten des Abtriebskörpers 46 ist das Betätigungsglied 27 in dem Ventilgehäuse 3 beziehungsweise in dem zweiten Gehäuseteil 3b drehbar gelagert und dadurch auch zuverlässig gegen Kippmomente abgestützt.

Der Abtriebsabschnitt 44 weist mehrere und insbesondere genau zwei exzentrisch bezüglich der Drehachse 28 angeordnete erste und zweite Kraftabgabestrukturen 48a, 48b auf. Über eine dieser beiden Kraftabgabestrukturen 48a, 48b erfolgt jeweils der lineare Antrieb des Kulissenschiebers 22 durch Zusammenwirken mit der an diesem Kulissenschieber 22 ausgebildeten Antriebskulisse 18.

Das Verdrehen des Betätigungsgliedes 27 hat ein Verschwenken der zur Drehachse 28 beabstandeten Kraftabgabestrukturen 48a, 48b um die Drehachse 28 zur Folge, woraus durch Zusammenwirken mit der zugeordneten Antriebskulisse 18 eine Antriebskraft resultiert, durch die der Kulissenschieber 22 aus der ersten Schieberstellung in die zweite Schieberstellung verschiebbar ist. Beim Zurückdrehen des Betätigungsgliedes 27 kehrt der Kulissenschieber 22 entweder gemäß Figuren 1 bis 10 aufgrund der Beaufschlagung seitens der Federeinrichtung 26 oder gemäß Figuren 11 bis 20 ebenfalls durch die aktive Beaufschlagung seitens der wirksamen Kraftabgabestruktur 48a oder 48b wieder in die erste Schieberstellung zurück.

Bei der rotativen Eingangsbewegung 34 des Betätigungsgliedes 27 bewegt sich die der Antriebskulisse 18 zugeordnete Kraftabgabestruktur 48a oder 48b an der Antriebskulisse 18 entlang. Der dabei stattfindende Kontakt bewirkt eine Kraftübertragung von der Kraftabgabestruktur 48a oder 48b auf den Kulissenschieber 22, der seinerseits auf das Ventilglied 7 einwirkt. Von Vorteil ist, dass durch unterschiedliche Gestaltung der Antriebskulisse 18 das beim Verdrehen des Betätigungsgliedes 27 auftretende Bewegungsverhalten des Kulissenschiebers 22 und somit auch das Bewegungsverhalten des mit dem Kulissenschieber 22 bewegungsgekoppelten Ventilgliedes 7 beeinflussbar ist. Es besteht insbesondere die Möglichkeit, durch entsprechende Abstimmung zwischen einer Kraftabgabestruktur 48a, 48b und einer Antriebskulisse 18 den Hub der Umschaltbewegung 8 zu beeinflussen und insbesondere unterschiedliche Hublängen vorzugeben.

Von Vorteil ist es, wenn die Ventilanordnung über mehrere unterschiedliche Kulissenschieber 22 verfügt, die mit abweichend voneinander gestalteten Antriebskulissen 18 ausgestattet sind, die ausgewählt in Kombination mit einem Betätigungsglied 27 nutzbar sind, um einen gewünschten Ventiltyp des mechanisch betätigbaren Ventils 1 zu bilden. Zweckmäßigerweise umfasst die Ventilanordnung gemäß dem Ausführungsbeispiel wenigstens zwei und bevorzugt genau zwei unterschiedliche Kulissenschieber 22, die zur besseren Unterscheidung im Folgenden auch als erster Kulissenschieber 22a und zweiter Kulissenschieber 22b bezeichnet sind, wobei der erste Kulissenschieber 22a eine im Folgenden als erste Antriebskulisse 18a bezeichnete Antriebskulisse 18 aufweist und der zweite Kulissenschieber 22b mit einer im Folgenden als zweite Antriebskulisse 18b bezeichneten Antriebskulisse 18 ausgestattet ist. Die beiden Antriebskulissen 18a, 18b unterscheiden sich in ihrer Formgebung voneinander. Der erste Kulissenschieber 22a ist in dem Ventil 1 gemäß Figuren 1 bis 10 eingebaut, wobei seine erste Antriebskulisse 18a mit der ersten Kraftübertragungsstruktur 48a des Betätigungsgliedes 27 zusammenwirkt. Der zweite Kulissenschieber 22b ist in das Ventil 1 der Figuren 11 bis 20 eingebaut, wobei die an ihm ausgebildete zweite Antriebskulisse 18b mit der zweiten Kraftabgabestruktur 48b des Betätigungsgliedes 27 kooperiert.

Die beiden Kraftabgabestrukturen 48a, 48b sind mit Abstand zueinander um die Drehachse 48 herum verteilt angeordnet. Bei der rotativen Eingangsbewegung 34 bewegen sie sich daher auf einer Kreisbahn um die Drehachse 28. Um beim Zusammenbau des Ventils 1 die angestrebte Zuordnung zwischen einerseits einer der beiden Kraftabgabestrukturen 48a, 48b und der Antriebskulisse 18 des eingebauten Kulissenschiebers 22 zu erreichen, wird das Betätigungsglied 27 mit voneinander abweichender drehwinkelmäßiger Ausrichtung installiert. Nimmt der Kulissenschieber 22 die erste Schieberstellung ein, unterscheiden sich also die Drehwinkelstellungen der Betätigungsglieder 27 voneinander, wenn sie gemäß Figuren 1 bis 10 mit dem ersten Kulissenschieber 22a oder gemäß Figuren 11 bis 20 mit dem zweiten Kulissenschieber 22b kombiniert sind. Gleichwohl ist ein und derselbe Typ von Betätigungsglied 27 zur Kombination mit beiden Kulissenschiebern 22a, 22b geeignet. In Abhängigkeit von der gewählten Kombination lassen sich die unterschiedlichen Ventiltypen des mechanisch betätigbaren Ventils 1 vorgeben.

Anstatt wie beim Ausführungsbeispiel das Betätigungsglied 27 mit einer der Anzahl unterschiedlicher Kulissenschieber 22a, 22b entsprechenden Anzahl von Kraftabgabestrukturen 48a, 48b auszustatten, besteht die alternative Möglichkeit, an dem Betätigungsglied 27 nur eine einzige Kraftabgabestruktur vorzusehen, die in der Lage ist, mit den Antriebskulissen 18a, 18b jedes Kulissenschiebers 22a, 22b zu kooperieren. Ferner besteht die Möglichkeit, an dem Betätigungsglied 27 mehrere Montagepositionen vorzusehen, an denen ein und dieselbe Kraftabgabestruktur alternativ montierbar ist, je nachdem, mit welcher Antriebskulisse 18a, 18b eine Kooperation gewünscht ist.

Wenn das Betätigungsglied 27 mit mehreren Kraftabgabestrukturen 48a, 48b ausgestattet ist, sind diese zweckmäßigerweise bezogen auf die Längsrichtung der Drehachse 28 auf gleicher axialer Höhe des Betätigungsgliedes angeordnet.

Die Kraftabgabestrukturen 48a, 48b können beispielsweise bolzenförmig oder stiftförmig ausgeführt sein. Exemplarisch ist die zweite Kraftabgabestruktur 48b mit einem zylindrischen Querschnitt versehen. Hiervon abweichende Formgebungen sind aber ebenfalls möglich, beispielsweise entsprechend der illustrierten ersten Kraftabgabestruktur 48a mit einem bogenförmigen und beispielsweise U-förmigen Querschnitt.

Bevorzugt ist die Antriebskulisse 18 von einer die Aussparung 47 des Kulissenschiebers 22 begrenzenden Randfläche 52 gebildet. Durch unterschiedliche Gestaltung dieser Randfläche 52 lassen sich sehr variabel unterschiedlichste Antriebskulissen 18 definieren.

Bei dem Ventil der Figuren 1 bis 10 ist die Antriebskulisse 18 von einem zumindest partiell bogenförmig gekrümmten Flächenabschnitt 52a der Randfläche 52 gebildet. Beim Verdrehen des Betätigungsgliedes 27 gleitet die erste Kraftabgabestruktur 48a an diesem bogenförmigen Flächenabschnitt 52a entlang und überträgt dadurch eine die Antriebsbewegung 23 hervorrufende Antriebskraft auf den ersten Kulissenschieber 22a.

Bei dem Ventil 1 der Figuren 11 bis 20 ist die zweite Antriebskulisse 18b von einer kerbenartigen Vertiefung 52b der Randfläche 52 der Aussparung 47 gebildet, in die die zweite Kraftabgabestruktur 48b eingreift. Diese zweite Kraftabgabestruktur 48b verbleibt bei der rotativen Eingangsbewegung 34 stets innerhalb der kerbenartigen Vertiefung 52b und verlagert sich lediglich in der Tiefenrichtung dieser kerbenartigen Vertiefung 52b. Dabei übt sie je nach Drehrichtung auf die eine oder andere Flanke der kerbenartigen Vertiefung 52b eine Antriebskraft aus, was zur Folge hat, dass der zweite Kulissenschieber 22b je nach Drehrichtung der rotativen Eingangsbewegung 34 aktiv in Richtung der ersten Schieberstellung oder in Richtung der zweiten Schieberstellung verlagert wird. Indem bei diesem Ventiltyp des Ventils 1 der Antriebsabschnitt 25 mit dem ersten axialen Endabschnitt 16 des Ventilgliedes in beiden axialen Richtungen bewegungsgekoppelt ist, ist der zweite Kulissenschieber 22b in der Lage, sowohl schiebende als auch ziehende Antriebskräfte auf das Ventilglied 7 zu übertragen, das folglich auch ohne eine Federeinrichtung 26 zwischen verschiedenen Schaltstellungen umschaltbar ist. Diese Ausgestaltung der Antriebskulisse 18 ist besonders vorteilhaft in Verbindung mit einem multistabilen und dabei insbesondere bistabilen Ventiltyp.

Es ist von Vorteil, wenn die Betätigungseinrichtung 5 mit einem Rastmechanismus 54 ausgestattet ist, der in der Lage ist, mindestens eine der Schaltstellungen des Ventilgliedes 7 ohne direktes Zusammenwirken mit diesem Ventilglied 7 lösbar zu fixieren. Bei der illustrierten Ventilanordnung sind sämtliche Ventile 1 mit einem solchen Rastmechanismus 54 ausgestattet.

Der Rastmechanismus 54 ist zwischen das Betätigungsglied 27 und das Ventilgehäuse 3 eingegliedert. Er enthält zwei lösbar verrastend miteinander kooperierende erste und zweite Rastelemente 55, 56, die in axialer Aufeinanderfolge koaxial zu der Drehachse 28 angeordnet sind. Die beiden Rastelemente 55, 56 haben einander zugewandte Stirnflächen, die im Falle des ersten Rastelementes 55 eine erste Rastmittelstruktur 57 und im Falle des zweiten Rastelementes 56 eine zweite Rastmittelstruktur 58 aufweisen.

Das mit der ersten Rastmittelstruktur 57 ausgestattete erste Rastelement 55 ist bezüglich der Drehachse 28 unverdrehbar, zugleich aber in Achsrichtung der Drehachse 28 verschiebbar am Ventilgehäuse 3 und exemplarisch an dem zweiten Gehäuseteil 3b angeordnet. Das zweite Gehäuseteil 3b weist bevorzugt einen zu der Drehachse 28 koaxialen und rechtwinkelig von der Hauptachse 2 wegragenden hohlzylindrischen Führungsfortsatz 62 auf, in dem das erste Rastelement 55 unter gleichzeitiger Verdrehsicherung linear verschiebbar geführt ist. Die dabei mögliche Linearbewegung des ersten Rastelementes 55 sei als Hubbewegung 63 bezeichnet und ist durch einen Doppelpfeil angedeutet.

Das erste Rastelement 55 ist zweckmäßigerweise zwischen dem Kulissenschieber 22 und dem Betätigungsabschnitt 32 platziert. Es ist insbesondere so ausgerichtet, dass seine erste Rastmittelstruktur 57 zu dem Kulissenschieber 22 weist.

Das die zweite Rastmittelstruktur 58 aufweisende zweite Rastelement 56 ist an dem Betätigungsglied 57 diesbezüglich unverdrehbar angeordnet, sodass es die rotative Eingangsbewegung 34 des Betätigungsgliedes 27 stets mitmacht. Es ist zudem in Achsrichtung der Drehachse 28 unbeweglich. Das zweite Rastelement 56 ist auf der dem Betätigungsabschnitt 32 axial entgegengesetzten Seite des ersten Rastelementes 55 platziert und sitzt im Falle eines mit einem Kulissenschieber 22 ausgestatteten Ventils 1 zweckmäßigerweise zwischen diesem Kulissenschieber 22 und dem ersten Rastelement 55. Die zweite Rastmittelstruktur 58 weist dabei in Achsrichtung der Drehachse 28 von dem Kulissenschieber 22 weg.

Für die unverdrehbare und zugleich verschiebbare Lagerung des ersten Rastelementes 55 sind beim Ausführungsbeispiel zwei an einander diametral entgegengesetzten Außenflächenabschnitten des bevorzugt hülsenförmigen ersten Rastelementes 55 angeordnete Führungsrippen 64 vorhanden, die sich in der Längsrichtung des ersten Rastelementes 55 erstrecken und die in komplementäre Führungsnuten am Innenumfang des Führungsfortsatzes 62 eingreifen. Von den Führungsrippen 64 ist in den Figuren 10 und 20 nur eine sichtbar. Die komplementären Führungsnuten liegen in der Zeichnung außerhalb der Schnittebenen und sind deshalb nicht sichtbar.

Das erste Rastelement 55 hat zentral eine bohrungsartige Durchbrechung 65, durch die das Betätigungsglied 27 spielbehaftet und frei drehbar hindurchgreift.

Auch das drehfest am Betätigungsglied 27 angeordnete zweite Rastelement 56 ist zweckmäßigerweise in dem hohlzylindrischen Führungsfortsatz 62 angeordnet. Somit kann sich der gesamte Rastmechanismus 54 kompakt innerhalb des hülsenförmigen Führungsfortsatzes 62 befinden.

Das zweite Rastelement 56 ist zweckmäßigerweise ein integraler Bestandteil des Abtriebskörpers 46. Beim Ausführungsbeispiel sind zur Bildung des Abtriebskörpers 46 dessen Abtriebsabschnitt 44 und das zweite Rastelement 56 einstückig miteinander ausgebildet.

Zu dem Rastmechanismus 54 gehörende Federmittel 66 wirken ständig mit einer Federkraft auf das linear bewegliche erste Rastelement 55 ein und drücken dieses mit der ersten Rastmittelstruktur 57 voraus gegen die zweite Rastmittelstruktur 58 des axial unbeweglich fixierten zweiten Rastelementes 56. Dadurch ist eine ständige axiale Anlage zwischen den beiden Rastmittelstrukturen 57, 58 gewährleistet. Wird das Betätigungsglied 27 zu der rotativen Eingangsbewegung 34 angetrieben, verdreht sich das zweite Rastelement 56 bezüglich des unverdrehbar fixierten ersten Rastelementes 55, wobei die zweite Rastmittelstruktur 58 an der mit ihr in Kontakt stehenden ersten Rastmittelstruktur 57 entlanggleitet. Die Federmittel 66 erlauben es dabei dem ersten Rastelement 55, sich entsprechend den Konturen der beiden Rastmittelstrukturen 57, 58 unter Überwindung der Federkraft der Federmittel 66 zu bewegen und die Hubbewegung 63 auszuführen. Dabei verändert es abhängig von den Konturen der beiden Rastmittelstrukturen 57, 58 seine bezüglich des zweiten Rastelementes 55 eingenommene Axialposition, was im Rahmen der hin und her gehenden Hubbewegung 63 stattfinden kann.

Bei nicht illustrierten Ausführungsbeispielen ist das erste Rastelement 55 axial unbeweglich, während das zweite Rastelement 56 die Hubbewegung 63 ausführen kann, oder es sind beide Rastelemente 55, 56 so ausgebildet, dass sie unabhängig voneinander eine Hubbewegung 63 durchführen können.

Die Federmittel 66 sind bevorzugt zwischen dem axial beweglichen ersten Rastelement 55 und dem Betätigungsglied 27 eingegliedert. Exemplarisch sitzen sie koaxial auf der das erste Rastelement 55 durchsetzenden Betätigungsstange 45, wobei sie sich axial einerseits an der Rückseite des ersten Rastelementes 55 und andererseits an dem Betätigungsabschnitt 32 abstützt. Die Federmittel 66 bestehen zweckmäßigerweise aus einer Schraubendruckfeder, die bevorzugt kegelförmig gestaltet ist.

Die beiden Rastmittelstrukturen 57, 58 sind so aufeinander abgestimmt, dass durch sie eine oder mehrere Drehpositionen des Betätigungsgliedes 27 und somit mittelbar auch eine oder mehrere Schaltstellungen des Ventilgliedes 7 lösbar fixierbar sind. Bei dem Ventil 1 der Figuren 1 bis 10 ist nur eine Drehposition lösbar verrastet, was damit zusammenhängt, dass dieses Ventil 1 in monostabiler Bauart ausgeführt ist. Hiervon abweichend sind bei dem Ventil 1 der Figuren 11 bis 20 zwei Drehpositionen des Betätigungsgliedes 27 lösbar verrastbar, sodass dieses Ventil 1 über ein bistabiles Umschaltverhalten verfügt.

Wie insbesondere aus den Figuren 10 und 20 ersichtlich ist, besteht die beim ersten Rastelement 55 ausgebildete erste Rastmittelstruktur 57 zweckmäßigerweise aus einer sich bevorzugt konzentrisch um die Drehachse 28 herum erstreckenden, axial orientierten Gleitfläche 67. Diese Gleitfläche 67 ist so konzipiert, dass sie mindestens eine in der Achsrichtung der Drehachse 28 vertiefte Rastvertiefung 68 definiert. An der Gleitfläche 67 liegt mindestens ein axial vorstehender Rastvorsprung 72 an, der Bestandteil der zum zweiten Rastelement 56 gehörenden zweiten Rastmittelstruktur 58 ist. Jeder Rastvorsprung 72 liegt stirnseitig an der Gleitfläche 67 an, an der er beim Verdrehen des Betätigungsgliedes 27 entlanggleitet. Diese Gleitbewegung 73 ist in den Figuren 10 und 20 durch Doppelpfeile angedeutet.

Liegen sich ein Rastvorsprung 72 und eine Rastvertiefung 68 axial gegenüber, ist ein Rasteingriff gegeben, durch den die momentane Drehposition des Betätigungsgliedes und dadurch indirekt auch die daraus resultierende Schaltstellung des Ventilgliedes 7 lösbar fixiert ist. Wird ausgehend hiervon das Betätigungsglied 27 verdreht, rastet der Rastvorsprung 72 unter Überwindung der Federkraft der Federmittel 66 aus der zugeordneten Rastvertiefung 68 heraus und bewegt sich entlang des sich daran anschließenden Längenabschnittes der Gleitfläche 67, bis entweder die Drehbewegung durch das Anschlagelement 35 und die Gegenanschläge 36 gestoppt wird oder bis der Rastvorsprung 72 in eine weitere Rastvertiefung 68 einrastet.

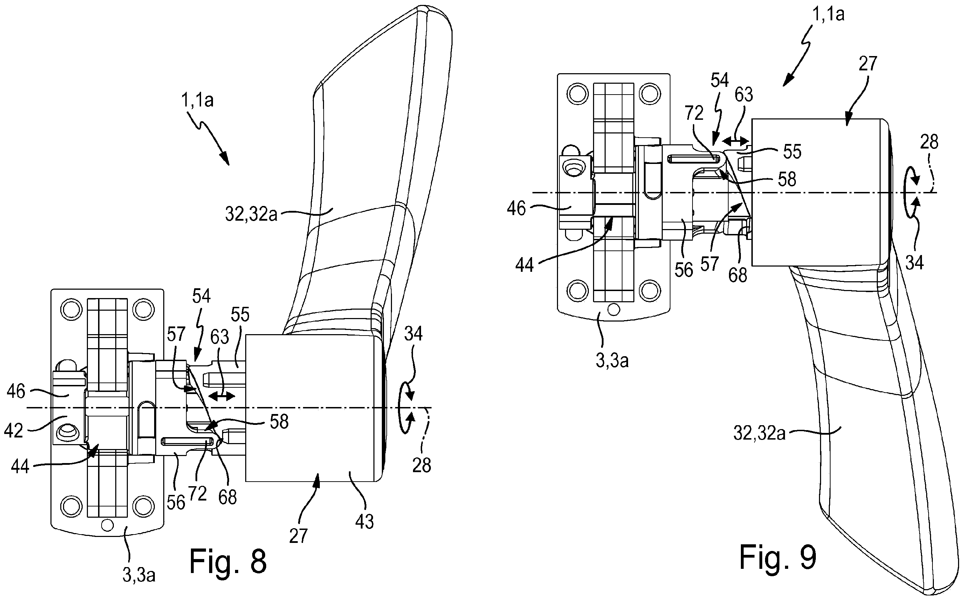

Wie insbesondere aus den Figuren 8, 9, 18 und 19 ersichtlich ist, sind die Rastvorsprünge 72 bevorzugt so gestaltet, dass sie sich an der der Gleitfläche 67 zugewandten Stirnseite verjüngen, sodass es sich bei ihrem Kontakt mit der Gleitfläche 67 um einen nur sehr schmalen linienförmigen Kontakt handelt.

Beim Ausführungsbeispiel sind die Rastvertiefungen 68 und die Rastvorsprünge 72 jeweils paarweise vorhanden, sodass das erste Rastelement 55 wenigstens ein Paar von Rastvertiefungen 68 aufweist, die sich an bezüglich der Drehachse 28 diametral gegenüberliegenden Stellen der Gleitfläche 67 befinden. In entsprechender Weise enthält die zweite Rastmittelstruktur 58 wenigstens ein und bevorzugt genau ein Paar von Rastvorsprüngen 72, die ebenfalls an sich bezüglich der Drehachse 28 diametral gegenüberliegenden Stellen an dem zweiten Rastelement 56 ausgebildet sind. Auf diese Weise wird erreicht, dass unabhängig von der Drehposition des Betätigungsgliedes 27 eine symmetrische axiale Zweipunktabstützung zwischen den beiden Rastelementen 55, 56 vorliegt, was den Rastvorgang begünstigt.

In den Figuren 10 und 20 sind durch jeweils zwei strichpunktierte Linien 74a, 74b zwei mögliche Positionen illustriert, in denen die hier nicht illustrierten Rastvorsprünge 72 in zwei möglichen rotativen Relativpositionen der beiden Rastelemente 55, 56 an der Gleitfläche 67 anliegen. Beim Ausführungsbeispiel der Figur 10 handelt es sich dabei im einen Fall (74a) um eine verrastete und im anderen Fall (74b) um eine unverrastete Drehposition. Die Gleitfläche 67 ist dabei zwischen diesen beiden Drehpositionen rampenförmig ansteigend ausgebildet und die Rastvertiefung 68 ist von einer Abstufung im Längsverlauf der Gleitfläche 67 definiert. Bei dem Ausführungsbeispiel der Figur 20 sind beide Drehpositionen 74a, 74b verrastete Drehpositionen, in denen die Rastvorsprünge 72 jeweils mit einer der Rastvertiefungen 68 in lösbarem Rasteingriff stehen. Während sich die erste Rastmittelstruktur 57 gemäß Figur 10 insbesondere zur Realisierung eines monostabilen Betriebsverhaltens eignet, ist die erste Rastmittelstruktur 57 gemäß Figur 20 für ein bistabiles Umschaltverhalten ausgelegt.

Abgesehen von den beiden illustrierten Formgebungen der Gleitflächen 67 sind noch weitere Formgebungen möglich, die sich darauf auswirken, ob das Betriebsverhalten monostabil oder bistabil ist und wie viele verrastbare Drehpositionen möglich sind. Außerdem kann durch die Wahl geneigter Flächenabschnitte der Gleitfläche 67 darauf Einfluss genommen werden, dass sich das Betätigungsglied 27 nach dem Loslassen des Betätigungsabschnittes 32 aufgrund der Federkraft der Federmittel 66 selbsttätig in eine Grundstellung zurückdreht.

Die Anordnung der Rastvertiefungen 68 und der Rastvorsprünge 72 kann bezüglich der beiden Rastelemente 55, 56 auch vertauscht sein.

Um Ventile unterschiedlichen Ventiltyps nach Bedarf herstellen zu können, verfügt die Ventilanordnung bevorzugt über mehrere erste Rastelemente 55 und/oder mehrere zweite Rastelemente 56, die sich in der Ausgestaltung der ersten und/oder zweiten Rastmittelstrukturen 57, 58 voneinander unterscheiden und die alternativ installiert werden können. Auf diese Weise lassen sich sehr einfach Ventile mit unterschiedlichem Betriebsverhalten zusammenbauen, was sich dadurch äußert, dass unterschiedliche Schaltstellungen und/oder ein unterschiedliches Umschaltverhalten bezüglich des Ventilgliedes 7 vorgebbar sind.

Die mehreren vorhandenen ersten und/oder zweiten Rastelemente 55, 56 erlauben auch eine problemlose Umrüstung ein und desselben Ventils hinsichtlich eines unterschiedlichen Betriebsverhaltens. So kann beispielsweise durch Austausch des ersten und/oder zweiten Rastelementes 55, 56 ein monostabiles Ventil 1 in ein bistabiles Ventil 1 umgerüstet werden, oder umgekehrt.

Vorzugsweise bleibt die erste Rastmittelstruktur 57 mit ihrem mindestens einen Rastvorsprung 72 immer die gleiche und wird nicht ausgetauscht. Das unterschiedliche Betriebsverhalten lässt sich dann einfach durch einen Austausch des zweiten Rastelementes 56 realisieren.

## Patentansprüche

1. Ventilanordnung, mit mindestens einem mechanisch betätigbaren Ventil (1), das ein in einem Ventilgehäuse (3) angeordnetes, unter Ausführung einer linearen Umschaltbewegung (8) in Achsrichtung einer Hauptachse (28) zwischen verschiedenen Schaltstellungen umschaltbares Ventilglied (7) aufweist und das über eine Betätigungseinrichtung (5) verfügt, die ein mechanisch zu einer rotativen Eingangsbewegung (34) um eine zu der Hauptachse (28) rechtwinkelige Drehachse antreibbares Betätigungsglied (27) aufweist, das zur Erzeugung der linearen Umschaltbewegung (8) des Ventilgliedes (7) mit dem Ventilglied (7) bewegungsgekoppelt ist, **dadurch gekennzeichnet, dass** die Betätigungseinrichtung (5) einen mindestens eine der Schaltstellungen des Ventilgliedes (7) lösbar fixierenden Rastmechanismus (54) aufweist, der über zwei zu der Drehachse (28) koaxiale erste und zweite Rastelemente (55, 56) verfügt, die an ihren einander axial zugewandten Stirnseiten über miteinander kooperierende erste und zweite Rastmittelstrukturen (57, 58) verfügen, die zwecks gegenseitigem Eingriff durch Federmittel (66) ständig axial aneinander angedrückt sind, wobei das die erste Rastmittelstruktur (57) aufweisende erste Rastelement (55) unverdrehbar am Ventilgehäuse (3) angeordnet ist und wobei das die zweite Rastmittelstruktur (58) aufweisende zweite Rastelement (56) unverdrehbar am Betätigungsglied (27) angeordnet ist, sodass es die rotative Eingangsbewegung (34) des Betätigungsgliedes (27) mitmacht und die beiden Rastmittelstrukturen (57, 58) bei Ausführung der rotativen Eingangsbewegung (34) aneinander abgleiten, wobei wenigstens eines der beiden Rastelemente (55, 56) entgegen der Federkraft der Federmittel (66) unter Ausführung einer Hubbewegung (63) in Achsrichtung der Drehachse (28) verschiebbar ist, sodass seine bezüglich des anderen Rastelementes (56, 55) eingenommene Axialposition durch das Zusammenwirken der bei der rotativen Eingangsbewegung (34) des Betätigungsgliedes (27) aneinander abgleitenden Rastmittelstrukturen (57, 58) veränderbar ist.

2. Ventilanordnung nach Anspruch 1, **dadurch gekennzeichnet, dass** nur eines der beiden Rastelemente (55) entgegen der Federkraft der Federmittel (66) axial verschiebbar ist, um die Hubbewegung (63) auszuführen.

3. Ventilanordnung nach Anspruch 1 oder 2, **dadurch gekennzeichnet, dass** nur das bezüglich des Ventilgehäuses (3) unverdrehbare erste Rastelement (55) entgegen der Federkraft der Federmittel (66) axial verschiebbar ist, um die Hubbewegung (63) auszuführen.

4. Ventilanordnung nach einem der Ansprüche 1 bis 3, **dadurch gekennzeichnet, dass** das bezüglich des Ventilgehäuses (3) unverdrehbare erste Rastelement (55) zur Ausführung der Hubbewegung (63) entgegen der Federkraft der Federmittel (66) relativ zum Ventilgehäuse (3) axial verschiebbar ist, wobei die Federmittel (66) zwischen dem ersten Rastelement (55) und dem Betätigungsglied (27) wirksam sind.

5. Ventilanordnung nach Anspruch 3 oder 4, **dadurch gekennzeichnet, dass** das erste Rastelement (55) in einem hohlzylindrischen Führungsfortsatz (62) des Ventilgehäuses (3) linear verschiebbar und zugleich unverdrehbar gelagert ist, wobei es von dem Betätigungsglied (27) zweckmäßigerweise koaxial durchgriffen ist, wobei das erste Rastelement (55) zweckmäßigerweise hülsenförmig ausgebildet ist.

6. Ventilanordnung nach Anspruch 5, **dadurch gekennzeichnet, dass** auch das bezüglich des Betätigungsgliedes (27) unverdrehbare zweite Rastelement (56) in dem hohlzylindrischen Führungsfortsatz (62) angeordnet ist.

7. Ventilanordnung nach einem der Ansprüche 1 bis 6, **dadurch gekennzeichnet, dass** das bezüglich des Betätigungsgliedes (27) unverdrehbare zweite Rastelement (56) an einem in dem Ventilgehäuse (3) angeordneten, die rotative Eingangsbewegung (34) mitmachenden Abtriebsabschnitt (44) des Betätigungsgliedes (27) angeordnet ist, der mindestens eine zur Erzeugung der Umschaltbewegung (8) mit dem Ventilglied (7) antriebsmäßig zusammenwirkende und bezüglich der Drehachse (28) exzentrisch angeordnete Kraftabgabestruktur (48a, 48b) aufweist, wobei das zweite Rastelement (56) zweckmäßigerweise einstückig mit diesem Abtriebsabschnitt (44) ausgebildet ist.

8. Ventilanordnung nach Anspruch 7, **dadurch gekennzeichnet, dass** die Betätigungseinrichtung (5) einen kraftübertragend zwischen den Abtriebsabschnitt (44) und das Ventilglied (7) eingegliederten Kulissenschieber (22, 22a, 22b) aufweist, der in Achsrichtung der Hauptachse (2) relativ zum Ventilgehäuse (3) bewegbar ist und der mindestens eine Antriebskulisse (18, 18a, 18b) aufweist, mit der die Kraftabgabestruktur (48a, 48b) des Abtriebsabschnittes (44) zur Erzeugung einer von der rotativen Eingangsbewegung (34) abgeleiteten und in Achsrichtung der Hauptachse (2) orientierten Antriebsbewegung (23) des Kulissenschiebers (22, 22a, 22b) zusammenwirkt, aus der die Umschaltbewegung (8) des Ventilgliedes (7) resultiert.

9. Ventilanordnung nach Anspruch 8, **dadurch gekennzeichnet, dass** der Kulissenschieber (22, 22a, 22b) einer von mehreren abhängig vom Ventiltyp des mechanisch betätigbaren Ventils (1) alternativ verwendbaren Kulissenschiebern (22, 22a, 22b) der Ventilanordnung ist, die voneinander abweichend gestaltete, für ein unterschiedliches Bewegungsverhalten des Ventilgliedes (7) verantwortliche Antriebskulissen (18, 18a, 18b) aufweisen.

10. Ventilanordnung nach einem der Ansprüche 1 bis 9, **dadurch gekennzeichnet, dass** die eine der beiden Rastmittelstrukturen (57) eine sich um die Drehachse (28) herum erstreckende, axial orientierte Gleitfläche (67) aufweist, die mindestens eine Rastvertiefung (68) definiert, wobei an dieser Gleitfläche (67) mindestens ein axial vorstehender Rastvorsprung (72) der anderen Rastmittelstruktur (58) der beiden Rastmittelstrukturen (57, 58) gleitverschieblich anliegt und bei der rotativen Eingangsbewegung (34) des Betätigungsgliedes (27) an der Gleitfläche (67) entlanggleitet, wobei durch das Eingreifen mindestens eines Rastvorsprunges (72) in eine Rastvertiefung (68) eine Drehposition des Betätigungsgliedes (27) und dadurch eine Schaltstellung des Ventilgliedes (7) lösbar fixiert ist und wobei zweckmäßigerweise sich der axiale Kontakt zwischen dem Rastvorsprung (72) und der Gleitfläche (67) in einer linienförmigen Berührung äußert.

11. Ventilanordnung nach Anspruch 10, **dadurch gekennzeichnet, dass** Rastvertiefungen (68) und Rastvorsprünge (72) zur Vorgabe mindestens einer Schaltstellung des Ventilgliedes (7) paarweise vorhanden sind, derart, dass zur Vorgabe mindestens einer Schaltstellung des Ventilgliedes (7) zwei Rastvorsprünge (72) jeweils mit einer von zwei Rastvertiefungen (68) in Eingriff bringbar sind, wobei sich die beiden Rastvorsprünge (72) und die beiden Rastvertiefungen (68) jeweils bezüglich der Drehachse (28) des Betätigungsgliedes (27) diametral gegenüberliegen.

12. Ventilanordnung nach einem der Ansprüche 1 bis 11, **dadurch gekennzeichnet, dass** durch die miteinander kooperierenden Rastmittelstrukturen (57, 58) mehrere Drehpositionen des Betätigungsgliedes (27) und dadurch mehrere Schaltstellungen des Ventilgliedes (7) lösbar fixierbar sind.

13. Ventilanordnung nach einem der Ansprüche 1 bis 12, **dadurch gekennzeichnet, dass** sie mehrere erste und/oder zweite Rastelemente (55, 56) aufweist, die sich in der Ausgestaltung der ersten und/oder zweiten Rastmittelstruktur (57, 58) voneinander unterscheiden und die alternativ installierbar ausgebildet sind, sodass bezüglich des Ventilgliedes (7) unterschiedliche Betriebsverhalten mit unterschiedlichen Schaltstellungen und/oder unterschiedlichen Umschaltverhalten vorgebbar sind.

14. Ventilanordnung nach einem der Ansprüche 1 bis 13, **dadurch gekennzeichnet, dass** das Betätigungsglied (27) einen bezüglich der Drehachse (28) radial abstehenden Handhebel (32a) zur manuellen Erzeugung der rotativen Eingangsbewegung (34) aufweist.

15. Ventilanordnung nach Anspruch 14, **dadurch gekennzeichnet, dass** der Handhebel (32a) an einer Betätigungsstange (45) befestigt ist, die drehfest in einen mit dem Ventilglied (7) bewegungsgekoppelten hülsenförmigen Abtriebskörper (46) des Betätigungsgliedes (27) eingesteckt ist, der das zweite Rastelement (56) bildet, das an einer axialen Stirnseite die zweite Rastmittelstruktur (58) aufweist, wobei der zweiten Rastmittelstruktur (58) in koaxialer Anordnung und mit zugewandter erster Rastmittelstruktur (57) das erste Rastelement (55) axial vorgelagert ist, das frei drehbeweglich von der Betätigungsstange (45) durchsetzt ist, wobei zwischen dem ersten Rastelement (55) und dem Handhebel (32a) koaxial die Federmittel (66) eingegliedert sind.

16. Ventilanordnung nach einem der Ansprüche 1 bis 15, **dadurch gekennzeichnet, dass** das Betätigungsglied (27) ein radial abstehendes Anschlagelement (35) aufweist, das zur Vorgabe mindestens einer End-Drehposition des Betätigungsgliedes (27) mit einem am Ventilgehäuse (3) angeordneten Gegenanschlag (36) zusammenwirken kann.

17. Ventilanordnung nach einem der Ansprüche 1 bis 16, **dadurch gekennzeichnet, dass** das Ventilgehäuse (3) mehrteilig ausgebildet ist und ein das Ventilglied (7) aufnehmendes erstes Gehäuseteil (3a) sowie ein daran befestigtes zweites Gehäuseteil (3b) aufweist, wobei in dem zweiten Gehäuseteil (3b) das Betätigungsglied (27) drehbar gelagert ist.

## Claims

1. Valve assembly comprising at least one mechanically actuable valve (1), which has a valve member (7) switchable between various switching positions in the axial direction of a main axis (28) while performing a linear switch-over movement (8) and which is provided with an actuating device (5) having an actuating member (27), which can be driven mechanically to perform a rotational input movement (34) about an axis of rotation perpendicular to the main axis (28) and which is motion-coupled to the valve member (7) for generating the linear switch-over movement (8) of the valve member (7), **characterised in that** the actuating device (5) comprises a latching mechanism (54), which releasably fixes at least one of the switching positions of the valve member (7) and which has two first and second latching elements (55, 56) coaxial with the axis of rotation (28), which are provided at their axially facing end faces with mutually cooperating first and second latching means structures (57, 58), which are constantly pressed against each other axially by spring means (66) for mutual engagement, wherein the first latching element (55) with the first latching means structure (57) is non-rotatably located on the valve housing (3) and wherein the second latching element (56) with the second latching means structure (58) is non-rotatably located on the on the actuating member (27), so that it participates in the rotational input movement (34) of the actuating member (27) and the two latching means structures (57, 58) slide on each other during the rotational input movement (34), wherein at least one of the two latching elements (55, 56) is displaceable against the spring force of the spring means (66) while performing a stroking movement (63) in the axial direction of the axis of rotation (28), so that its axial position adopted relative to the other latching element (56, 55) can be changed by the cooperation of the latching means structures (57, 58) sliding on each other during the rotational input movement (34) of the actuating member (27).

2. Valve assembly according to claim 1, **characterised in that** only one of the two latching elements (55) is axially displaceable against the spring force of the spring means (66) for performing the stroking movement (63).

3. Valve assembly according to claim 1 or 2, **characterised in that** only the first latching elements (55), which is non-rotatable relative to the valve housing (3), is axially displaceable against the spring force of the spring means (66) for performing the stroking movement (63).

4. Valve assembly according to any of claims 1 to 3, **characterised in that** the first latching element (55), which is non-rotatable relative to the valve housing (3), is axially displaceable relative to the valve housing (3) for performing the stroking movement (63) against the spring force of the spring means (66), the spring means (66) acting between the first latching elements (55) and the actuating member (27).

5. Valve assembly according to claim 3 or 4, **characterised in that** the first latching element (55) is mounted in a linearly displaceable while non-rotatable manner in a hollow-cylindrical guide extension (62) of the valve housing (3), wherein the actuating member (27) expediently extends through it coaxially, the first latching element (55) being expediently of a sleeve-shaped design.

6. Valve assembly according to claim 5, **characterised in that** the second latching element (56), which is non-rotatable relative to the actuating member (27), is located in the hollow-cylindrical guide extension (62) as well.

7. Valve assembly according to any of claims 1 to 6, **characterised in that** the second latching element (56), which is non-rotatable relative to the actuating member (27), is located at an output section (44) of the actuating member (27), which output section (44) is located in the valve housing (3), participates in the rotational input movement (34) and has at least one force output structure (48a, 48b) acting together with the valve member (7) in drive terms for generating the switch-over movement (8) and being arranged eccentrically relative to the axis of rotation (28), the second latching element (56) being expediently designed in one piece with this output section (44).

8. Valve assembly according to claim 7, **characterised in that** the actuating device (5) comprises a gate slide (22, 22a, 22b), which is incorporated between the output section (44) and the valve member (7) for force transmission, is movable relative to the valve housing (3) in the axial direction of the main axis (2) and has at least one drive gate (18, 18a, 18b), with which the force output structure (48a, 48b) acts together to generate a drive movement (23) of the gate slide (22, 22a, 22b), which is derived from the rotational input movement (34) and oriented in the axial direction of the main axis (2), and from which the switch-over movement (8) of the valve member (7) results.

9. Valve assembly according to claim 8, **characterised in that** the gate slide (22, 22a, 22b) is one of several gate slides (22, 22a, 22b) of the valve assembly, which can be used alternatively depending on the valve type of the mechanically actuable valve (1) and which have drive gates (18, 18a, 18b) designed differently from one another and responsible for different movement behaviours of the valve member (7).

10. Valve assembly according to any of claims 1 to 9, **characterised in that** the one of the two latching means structures (57) has an axially oriented sliding surface (67), which extends around the axis of rotation (28) and defines at least one latching recess (68), wherein at least one axially projecting latching projection (72) of the other latching means structure (58) of the two latching means structures (57, 58) is in contact with this sliding surface (67) in a slidable manner and slides along the sliding surface (67) during the rotational input movement (34) of the actuating member (27), wherein a rotary position of the actuating member (27) and thus a switching position of the valve member (7) is releasably fixed by the engagement of at least one latching projection (72) with a latching recess (68), and wherein the axial contact between the latching projection (72) and the sliding surface (67) is expediently expressed in a linear contact.

11. Valve assembly according to claim 10, **characterised in that** the latching recesses (68) and the latching projections (72) are provided in pairs for presetting at least one switching position of the valve member (7) in such a way that, in order to preset at least one switching position of the valve member (7), each of two latching projections (72) can be brought into engagement with one of two latching recesses (68), wherein the two latching projections (72) and the two latching recesses (68) are located diametrically opposite each other relative to the axis of rotation (28) of the actuating member (27).

12. Valve assembly according to any of claims 1 to 11, **characterised in that** several rotary positions of the actuating member (27) and thus several switching positions of the valve member (7) can be releasably fixed by the cooperating latching means structures (57, 58).

13. Valve assembly according to any of claims 1 to 12, **characterised in that** it comprises several first and/or second latching elements (55, 56), which differ in the design of the first and/or second latching means structure (57, 58) and are designed for alternative installation, so that different operating behaviours with different switching positions and/or different switch-over behaviours can be preset for the valve member (7).

14. Valve assembly according to any of claims 1 to 13, **characterised in that** the actuating member (27) comprises a hand lever (32a) radially projecting relative to the axis of rotation (28) for manually generating the rotational input movement (34).

15. Valve assembly according to claim 14, **characterised in that** the hand lever (32a) is attached to an actuating rod (45), which is non-rotatably inserted into a sleeve-shaped output body (46) of the actuating member (27), which output body (46) is motion-coupled to the valve member (7) and forms the second latching element (56), which has the second latching means structure (58) at an axial end face, wherein the first latching element (55), through which the actuating rod (45) passes in a freely rotatable manner, is axially located in front of the second latching means structure (58) in a coaxial arrangement and with the first latching means structure (57) facing, the spring means (66) being coaxially incorporated between the first latching element (55) and the hand lever (32a).

16. Valve assembly according to any of claims 1 to 15, **characterised in that** the actuating member (27) has a radially projecting stop element (35), which can act together with a mating stop (36) located on the valve housing (3) for presetting at least one rotary end position of the actuating member (27).

17. Valve assembly according to any of claims 1 to 16, **characterised in that** the valve housing (3) is designed in several parts and comprises a first housing part (3a) accommodating the valve member (7) and a second housing part (3b) secured to the former, the actuating member (27) being rotatably mounted in the second housing part (3b).

## Revendications

1. Système de vannes, avec au moins une vanne (1) actionnable mécaniquement, qui présente un organe de vanne (7) agencé dans un boîtier de vanne (3), commutable entre différentes positions de commutation en réalisant un mouvement de commutation linéaire (8) dans la direction axiale d'un axe principal (28) et qui dispose d'un dispositif d'actionnement (5), qui présente un organe d'actionnement (27) pouvant être entraîné mécaniquement en un mouvement d'entrée rotatif (34) autour d'un axe de rotation perpendiculaire à l'axe principal (28), qui est couplé en mouvement avec l'organe de vanne (7) pour la génération du mouvement de commutation linéaire (8) de l'organe de vanne (7), **caractérisé en ce que** le dispositif d'actionnement (5) présente un mécanisme d'encliquetage (54) fixant de manière amovible au moins une des positions de commutation de l'organe de vanne (7), qui dispose de deux premier et deuxième éléments d'encliquetage (55, 56) coaxiaux à l'axe de rotation (28), qui disposent de première et deuxième structures de moyen d'encliquetage (57, 58) coopérant l'une avec l'autre au niveau de leurs côtés avant tournés axialement l'un vers l'autre, qui sont pressées en permanence axialement l'une contre l'autre pour une mise en prise réciproque par des moyens de ressort (66), dans lequel le premier élément d'encliquetage (55) présentant la première structure de moyen d'encliquetage (57) est agencé de manière à ne pas pouvoir tourner au niveau du boîtier de vanne (3) et dans lequel le deuxième élément d'encliquetage (56) présentant la deuxième structure de moyen d'encliquetage (58) est agencé de manière à ne pas pouvoir tourner au niveau de l'organe d'actionnement (27) de sorte qu'il participe au mouvement d'entrée rotatif (34) de l'organe d'actionnement (27) et les deux structures de moyen d'encliquetage (57, 58) glissent l'une sur l'autre lors de la réalisation du mouvement d'entrée rotatif (34), dans lequel au moins un des deux éléments d'encliquetage (55, 56) est déplaçable dans la direction axiale de l'axe de rotation (28) contre la force ressort du moyen de ressort (66) en réalisant un mouvement de levage (63) de sorte que sa position axiale adoptée par rapport à l'autre élément d'encliquetage (56, 55) soit modifiable par la coopération des structures de moyen d'encliquetage (57, 58) glissant l'une sur l'autre lors du mouvement d'entrée rotatif (34) de l'organe d'actionnement (27).

2. Système de vannes selon la revendication 1, **caractérisé en ce que** seulement un des deux éléments d'encliquetage (55) est déplaçable axialement contre la force de ressort des moyens de ressort (66) pour réaliser le mouvement de levage (63).

3. Système de vannes selon la revendication 1 ou 2, **caractérisé en ce que** seulement le premier élément d'encliquetage (55) ne pouvant pas tourner par rapport au boîtier de vanne (3) est déplaçable axialement contre la force de ressort des moyens de ressort (66) pour réaliser le mouvement de levage (63).

4. Système de vannes selon l'une quelconque des revendications 1 à 3, **caractérisé en ce que** le premier élément d'encliquetage (55) ne pouvant pas tourner par rapport au boîtier de vanne (3) est déplaçable axialement par rapport au boîtier de vanne (3) contre la force de ressort des moyens de ressort (66) pour la réalisation du mouvement de levage (63), dans lequel les moyens de ressort (66) sont actifs entre le premier élément d'encliquetage (55) et l'organe d'actionnement (27).

5. Système de vannes selon la revendication 3 ou 4, **caractérisé en ce que** le premier élément d'encliquetage (55) est logé de manière linéairement déplaçable dans un prolongement de guidage cylindrique creux (62) du boîtier de vanne (3) et en même temps de manière à ne pas pouvoir tourner, dans lequel il est traversé coaxialement de manière appropriée par l'organe d'actionnement (27), dans lequel le premier élément d'encliquetage (55) est réalisé de manière appropriée en forme de douille.

6. Système de vannes selon la revendication 5, **caractérisé en ce que** le deuxième élément d'encliquetage (56) ne pouvant pas tourner par rapport à l'organe d'actionnement (27) est également agencé dans le prolongement de guidage cylindrique creux (62).

7. Système de vannes selon l'une quelconque des revendications 1 à 6, **caractérisé en ce que** le deuxième élément d'encliquetage (56) ne pouvant pas tourner par rapport à l'organe d'actionnement (27) est agencé au niveau d'une section de sortie (44) de l'organe d'actionnement (27) participant au mouvement d'entrée rotatif (34), agencée dans le boîtier de vanne (3), qui présente au moins une structure de sortie de force (48a, 48b) agencée de manière excentrique par rapport à l'axe de rotation (28) et coopérant par entraînement avec l'organe de vanne (7) pour la génération du mouvement de commutation (8), dans lequel le deuxième élément d'encliquetage (56) est réalisé de manière appropriée d'un seul tenant avec cette section de sortie (44).

8. Système de vannes selon la revendication 7, **caractérisé en ce que** le dispositif d'actionnement (5) présente un coulisseau (22, 22a, 22b) intégré avec transmission de force entre la section de sortie (44) et l'organe de vanne (7), qui est mobile dans la direction axiale de l'axe principal (2) par rapport au boîtier de vanne (3) et présente l'au moins un coulisseau d'entraînement (18, 18a, 18b), avec lequel la structure de sortie de force (48a, 48b) de la section de sortie (44) coopère pour la génération d'un mouvement d'entraînement (23) du coulisseau (22, 22a, 22b) dérivé du mouvement d'entrée rotatif (34) et orienté dans la direction axiale de l'axe principal (2) duquel résulte le mouvement de commutation (8) de l'organe de vanne (7).

9. Système de vannes selon la revendication 8, **caractérisé en ce que** le coulisseau (22, 22a, 22b) est un de plusieurs coulisseaux (22, 22a, 22b) du système de vannes utilisables en variante en fonction du type de vanne de la vanne (1) actionnable mécaniquement, qui présentent des coulisseaux d'entraînements (18, 18a, 18b) configurés différemment l'un de l'autre, responsables pour un comportement de mouvement différent de l'organe de vanne (7).

10. Système de vannes selon l'une quelconque des revendications 1 à 9, **caractérisé en ce que** l'une des deux structures de moyen d'encliquetage (57) présente une surface de glissement (67) orientée axialement, s'étendant autour de l'axe de rotation (28), qui définit au moins un évidement d'encliquetage (68), dans lequel au moins une saillie d'encliquetage (72) axialement en saillie de l'autre structure de moyen d'encliquetage (58) des deux structures de moyen d'encliquetage (57, 58) s'appuie de manière mobile par glissement contre cette surface de glissement (67) et glisse le long de la surface de glissement (67) lors du mouvement d'entrée rotatif (34) de l'organe d'actionnement (27), dans lequel par la mise en prise d'au moins une saillie d'encliquetage (72) dans un évidement d'encliquetage (68), une position de rotation de l'organe d'actionnement (27) et ainsi une position de commutation de l'organe de vanne (7) est fixée de manière amovible et dans lequel le contact axial entre la saillie d'encliquetage (72) et la surface de glissement (67) s'exprime de manière appropriée dans un contact linéaire.

11. Système de vannes selon la revendication 10, **caractérisé en ce que** des évidements d'encliquetage (68) et des saillies d'encliquetage (72) sont présents par paire pour la prescription d'au moins une position de commutation de l'organe de vanne (7) de telle manière que deux saillies d'encliquetage (72) peuvent être amenées en prise respectivement avec un des deux évidements d'encliquetage (68) pour la prescription d'au moins une position de commutation de l'organe de vanne (7), dans lequel les deux saillies d'encliquetage (72) et les deux évidements d'encliquetage (68) sont diamétralement opposés respectivement par rapport à l'axe de rotation (28) de l'organe d'actionnement (27).

12. Système de vannes selon l'une quelconque des revendications 1 à 11, **caractérisé en ce que** par les structures de moyen d'encliquetage (57, 58) coopérant l'une avec l'autre, plusieurs positions de rotation de l'organe d'actionnement (27) et ainsi plusieurs positions de commutation de l'organe de vanne (7) peuvent être fixées de manière amovible.

13. Système de vannes selon l'une quelconque des revendications 1 à 12, **caractérisé en ce qu'**il présente plusieurs premier et/ou deuxième éléments d'encliquetage (55, 56), qui se distinguent l'un de l'autre dans la configuration de la première et/ou deuxième structure de moyen d'encliquetage (57, 58) et sont réalisés de manière à pouvoir être installés en variante de sorte que différents comportements de fonctionnement avec différentes positions de commutation et/ou différents comportements de commutation puissent être prescrits par rapport à l'organe de vanne (7).

14. Système de vannes selon l'une quelconque des revendications 1 à 13, **caractérisé en ce que** l'organe d'actionnement (27) présente un levier manuel (32a) radialement en saillie par rapport à l'axe de rotation (28) pour la génération manuelle du mouvement d'entrée rotatif (34).

15. Système de vannes selon la revendication 14, **caractérisé en ce que** le levier manuel (32a) est fixé à une tige d'actionnement (45), qui est enfichée solidaire en rotation dans un corps de sortie (46) en forme de douille de l'organe d'actionnement (27) couplé en mouvement avec l'organe de vanne (7) qui forme le deuxième élément d'encliquetage (56), qui présente la deuxième structure de moyen d'encliquetage (58) au niveau de son côté avant axial, dans lequel le premier élément d'encliquetage (55) est logé axialement en amont de la deuxième structure de moyen d'encliquetage (58) en agencement coaxial et avec la première structure de moyen d'encliquetage (57) en regard, qui est traversé de manière librement mobile en rotation par la tige d'actionnement (45), dans lequel les moyens de ressort (66) sont intégrés coaxialement entre le premier élément d'encliquetage (55) et le levier manuel (32a).

16. Système de vannes selon l'une quelconque des revendications 1 à 15, **caractérisé en ce que** l'organe d'actionnement (27) présente un élément de butée (35) dépassant radialement, qui peut coopérer avec une contrebutée (36) agencée au niveau du boîtier de vanne (3) pour la prescription d'au moins une position de rotation finale de l'organe d'actionnement (27).

17. Système de vannes selon l'une quelconque des revendications 1 à 16, **caractérisé en ce que** le boîtier de vanne (3) est réalisé en plusieurs parties et présente un premier élément de boîtier (3a) recevant l'organe de vanne (7) ainsi qu'un deuxième élément de boîtier (3b) qui y est fixé, dans lequel l'organe d'actionnement (27) est logé de manière rotative dans la deuxième partie de boîtier (3b).
